Europäisches Patentamt

European Patent Office

Office européen des brevets

(11) Veröffentlichungsnummer: **0 600 113 A1**

# EUROPÄISCHE PATENTANMELDUNG

(21) Anmeldenummer: **92120422.8**

(22) Anmeldetag: **30.11.92**

(51) Int. Cl.5: **G06F 15/16**, G06F 12/14

(43) Veröffentlichungstag der Anmeldung:
**08.06.94 Patentblatt 94/23**

(84) Benannte Vertragsstaaten:
**AT BE CH DE DK ES FR GB GR IE IT LI LU MC NL PT SE**

(71) Anmelder: **Siemens Nixdorf Informationssysteme Aktiengesellschaft Fürstenallee 7 D-33102 Paderborn(DE)**

(72) Erfinder: **Eckenberger, Eberhard, Dipl.-Ing. Bettinastrasse 23 W-8000 München 83(DE)**
Erfinder: **Sapotta, Karl, Dr.rer.nat. Oefelestrasse 13 W-8000 München 90(DE)**
Erfinder: **Wimmer, Manfred, Dipl.-Ing. Pierling 28 W-8225 Traunreut(DE)**
Erfinder: **Maximilien, Eric 11 Alleé des Acacias F-92310 Sevres(FR)**

(74) Vertreter: **Fuchs, Franz-Josef, Dr.-Ing. et al Postfach 22 13 17 D-80503 München (DE)**

(54) Datenverarbeitungsanlage mit schlüsselgesteuertem Speicherzugriff.

(57) In einem modulartig aufgebauten Multiprozessorsystem mit gemeinsamem Arbeitsspeicher (MM), bei dem einzelne oder mehrere Monoprozessorsysteme als Module Knoten (K...) in einem Arbeitsspeicherverbindungs- netzwerk (MCU) bilden, sind den einzelnen Knoten (K...) individuelle Schlüsselspeichersteuereinheiten (KMU) mit einem real adressierbaren Schlüsselspeicher (KM) zugeordnet, in den jeweils die Speicherschlüssel (ACC) aller im Arbeitsspeicher (MM) enthaltenen geschützten Datenabschnitte eingetragen sind. Alle Schlüsselspeicher- steuereinheiten (KMU) sind zweckmäßig über ein gesondertes Verbindungsnetzwerk (KBUS) direkt miteinander verbunden, um Einträge (KEY) der verschiedenen Schlüsselspeicher (KM) lesen oder ändern zu können. Hohe Redundanz und Ausfallsicherheit mit der Möglichkeit zur Änderung der Systemkonfigurationen.

EP 0 600 113 A1

FIG 1

Die Erfindung betrifft eine Datenverarbeitungsanlage entsprechend dem Oberbegriff des Patentanspruches 1.

Eine Sicherung der Zugriffe zum Arbeitsspeicher durch Speicherschlüssel in der Weise, daß ein dem zu verarbeitenden einzelnen Programm oder Programmabschnitt jeweils zugeordneter Zugriffsschlüssel mit dem den einzelnen Speicherabschnitten zugeordneten Speicherschlüssel verglichen und ein Zugriff nur bei Übereinstimmung beider Schlüssel erlaubt wird, ist allgemein bekannt.

Die Schlüsselverwaltung für den Speicherschutz ist dabei eng mit der Adreßumsetzung verknüpft, indem die Speicherschlüssel in den Adreßumsetzungstabellen geführt und z.B. bei Übersetzung einer virtuellen Seitenadresse in eine reale Seitenadresse für den Arbeitsspeicher in den Adreßumsetzungspuffer übernommen werden - man siehe z.B. "Computer Architecture And Parallel Processing" von Kai Hwank und Faye A. Briggs, McGraw-Hill Book Company, New York, 1984, S. 65 bis 79, oder Siemens Druckschrift D15/5104 -04, S. 6-1 bis 6-7.

Andererseits ist es bekannt, die Speicherschlüssel zu jeder in den Arbeitsspeicher geladenen Speicherseite in einem gesonderten Speicherteil des Arbeitsspeichers als Schlüsselspeicher mit der realen Seitenadresse ansteuerbar zusammengefaßt zu speichern -man siehe z.B. EP-0 106 600-B1. Die Überprüfung der Zugriffsberechtigung erfolgt dabei im Rahmen der Speicheransteuerung vor dem freizugebenden, eigentlichen Speicherzugriff auf die Daten im Arbeitsspeicher. Auch diese Lösung läßt sich mit einem Adreßumsetzungspuffer, dessen Einträge zusätzlich den Speicherschlüssel enthalten, koppeln mit dem Vorteil, daß Arbeitsspeicherzugriffe unmittelbar ohne vorherige Prüfung anhand des Eintrags im Schlüsselspeicher freigegeben werden können.

Den eigentlichen Schlüsselwerten sind im allgemeinen gesonderte, der Verwaltung dienende Steuerbits zugeordnet, die darüber Auskunft geben, ob auf eine zugehörige Datenseite im Arbeitsspeicher Zugegriffen worden ist und ob der Zugriff schreibend und damit datenverändernd war. Diese Steuerbits müssen daher bei jedem Speicherzugriff angesteuert und gegebenenfalls geändert werden, so daß es zweckmäßig ist, bei Verwendung eines Adreßumsetzungspuffers diese Steuerbits auch dort zu führen und bei der Löschung eines Eintrags im Adreßumsetzungspuffer in den Schlüsselspeicher zu übertragen. Andererseits ist bei jeder Änderung eines Schlüsseleintrags im Schlüsselspeicher die im Adreßumsetzungspuffer enthaltene Kopie des Schlüsseleintrags zu löschen.

Die damit verbundenen Steuerungsmaßnahmen lassen sich bei Monoprozessorsystemen noch verhältnismäßig günstig lösen. Bei einem Multiprozessorsystem mit gemeinsamem Arbeitsspeicher, insbesondere bei einem solchen, das ausgehend von einem Monoprozessorsystem durch Vervielfachung modulartig aufgebaut ist, ergeben sich jedoch erhebliche Probleme. So steigt trotz Führung der Steuerbits in den Adreßumsetzungspuffern die Belastung des Arbeitsspeicherverbindungsnetzwerkes und des Arbeitsspeichers erheblich an. Hinzu kommt, daß bei einem Seitenaustausch im Arbeitsspeicher mit Änderung des Schlüsseleintrags im Schlüsselspeicher die Steuerbits in allen Adreßumsetzungspuffern zu berücksichtigen und alle vorhandenen Kopien eines ungültig gewordenen Schlüsseleintrags zu löschen sind, was über das Arbeitsspeicherverbindungsnetzwerk nur mit großem Aufwand und in die Systemleistung stark mindernder Weise möglich ist. Außerdem werden zusätzliche Maßnahmen zur Gewährleistung der Ausfallsicherheit und der Konfigurierbarkeit erforderlich.

Aufgabe der Erfindung ist es daher, eine Datenverarbeitungsanlage entsprechend dem Oberbegriff des Patentanspruches 1 so zu gestalten, daß die mit der Verwaltung der Speicherschlüssel verbundenen Probleme in einfacher und die Datenverarbeitungsanlage weniger belastender Weise bei hoher Betriebssicherheit gelöst werden, ohne daß die Möglichkeiten der Konfigurierbarkeit beeinträchtigt werden.

Diese Aufgabe wird durch die kennzeichnenden Merkmale des Patentanspruches 1 gelöst. Danach werden je Knoten individuelle Schlüsselspeichersteuereinheiten mit Schlüsselspeicher vorgesehen. Alle Schlüsselspeicher enthalten dabei die Speicherschlüssel aller im Arbeitsspeicher enthaltenen geschützten Datenabschnitte, z.B. in Form von Seiten, so daß bei Wahrung der Vorteile der modulartigen Erweiterbarkeit eine ausreichende Redundanz bei Ausfall eines Knotens gegeben ist. Durch die Verlagerung der Schlüsselspeicher aus dem Arbeitsspeicher in eine unabhängige Schlüsselspeichersteuereinheit wird das Arbeitsspeicherverbindungsnetzwerk wesentlich entlastet, da die im Rahmen von Adreßübersetzungen notwendigen Änderungen der Steuerbits in direkter Zusammenarbeit mit der Schlüsselspeichersteuereinheit am Knoten vorgenommen werden können, ohne daß alle Schlüsselspeicher des Systems anzusteuern sind. Lediglich bei den wesentlich seltener auftretenden Änderungen der Speicherschlüssel in den Einträgen der Schlüsselspeicher sind alle Schlüsselspeichersteuereinheiten anzusteuern. Dies kann weiterhin analog dem allgemeinen Informationsaustausch zwischen den einzelnen Knoten über das vorhandene Arbeitsspeicherverbindungsnetzwerk erfolgen.

Wesentlich vorteilhafter ist dagegen gemäß Anspruch 2 ein gesondertes Verbindungsnetzwerk, das alle Schlüsselspeichersteuereinheiten direkt miteinander verbindet, so daß das Arbeitsspeicherverbindungsnetz-

EP 0 600 113 A1

werk auch von dem bei Seitenänderungen im Arbeitsspeicher erforderlichen Informationsaustausch vollkommen entlastet wird. Außerdem kann ein gesondertes Verbindungsnetzwerk den Anforderungen entsprechend frei und damit auch günstiger gestaltet werden.

Die weiteren Unteransprüche beziehen sich auf die Strukturierung der Knoten, auf die Kopplung der einzelnen Prozessoren an einem Knoten mit der jeweiligen Schlüsselspeichersteuereinheit und einem gesonderten Verbindungsnetzwerk, auf die Verwaltung der Steuerbits in den einzelnen Schlüsselspeichern, auf die Gestaltung des gesonderten Verbindungsnetzwerkes und auf die Steuerung des Informationsaustausches über dieses Verbindungsnetzwerk.

Einzelheiten der Erfindung seien nachfolgend anhand eines in der Zeichnung dargestellten Ausführungsbeispieles näher erläutert. Im einzelnen zeigen

Figur 1 ein Übersichtschaltbild eines modulartig aufgebauten Multiprozessorsystems gemäß der Erfindung,

Figur 2 ein Blockschaltbild der Schlüsselspeichersteuereinheit gemäß der Erfindung mit den zugehörigen Schnittstellen,

Figur 3 ein Flußdiagramm zur Erläuterung des Steuerungsablaufs bei einem an die Adreßumsetzungseinheit gerichteten Speicherzugriff,

Figur 4 ein Flußdiagramm zu Erläuterung des Steuerungsablaufs in der Schlüsselspeichersteuereinheit, abhängig vom jeweils auszuführenden Befehl,

Figur 5A und 5B Flußdiagramme für die Ausführung einzelner Befehle in Ergänzung des Flußdiagramms von Figur 4.

Figur 6 ein Blockschaltbild des jeweiligen Verbindungsknotens im gesonderten Verbindungsnetzwerk mit den Schnittstellenanschlüssen für die jeweiligen Prozessoren und Verbindungsleitungen,

Figur 7 ein Blockschaltbild der Anforderungs- und Freigabesteuerung an jedem Verbindungsknoten und

Figur 8A bis 8C Flußdiagramme zur Erläuterung des Steuerungsablaufes für den Informationsaustausch über das gesonderte Verbindungsnetzwerk.

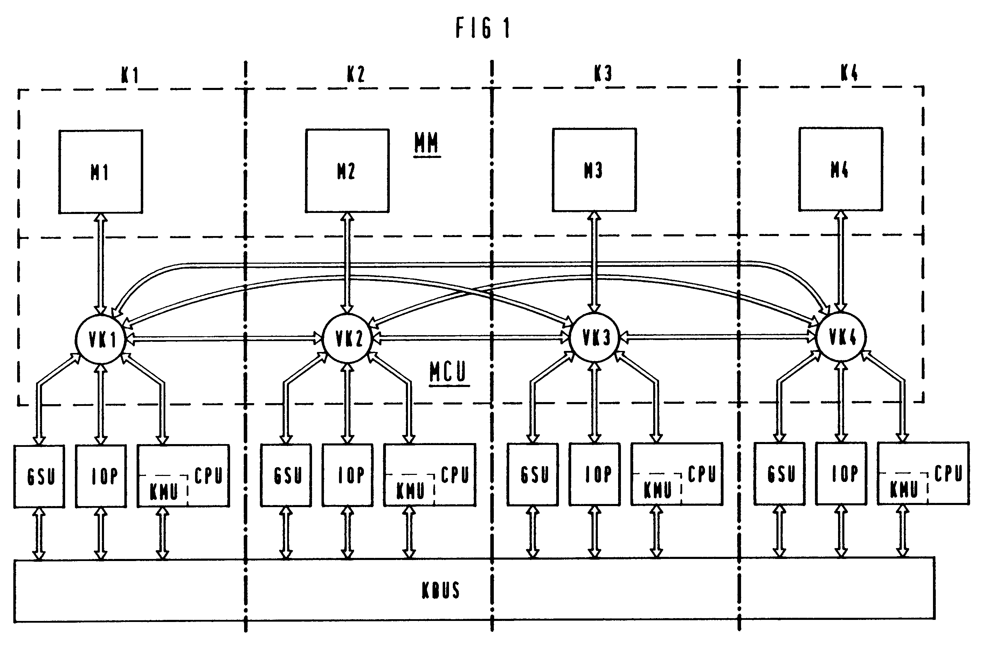

Figur 1 zeigt ein aus vier Monoprozessorsystemen entsprechend den Knoten K1 bis K4 modulartig aufgebautes Multiprozessorsystem. Jedes Monoprozessorsystem besteht dabei aus einem Speichermodul M... eines gemeinsamen Arbeitsspeichers MM, einem Verarbeitungsprozessor CPU und einem Ein-/Ausgabeprozessor IOP sowie im Falle eines globalen Speichers aus einem entsprechenden Anschlußprozessor GSU als weitere Ein-/Ausgabeeinheit.

Alle diese Einheiten sind jeweils an einen gemeinsamen Verbindungsknoten VK... eines Arbeitsspeicherverbindungsnetzwerkes MCU angeschlossen, über das die einzelnen Prozessoren aller Knoten K1 bis K4 Zugriff zu den einzelnen Modulen M1 bis M4 des Arbeitsspeichers MM haben. Ein derartiges Multiprozessorsystem ist beispielsweise durch EP-0 477 406-A1 bekannt.

Entsprechend dem gewählten Ausführungsbeispiel ist an jedem Knoten K1 bis K4 eine individuelle Schlüsselspeichersteuereinheit KMU vorgesehen, die mit dem jeweiligen Verarbeitungsprozessor CPU gekoppelt ist und über die dieser wie auch die übrigen Prozessoren IOP und GSU mit einem gesonderten Verbindungsnetzwerk KBUS in Verbindung steht, über das unabhängig vom Arbeitsspeicherverbindungsnetzwerk Informationen aus den Schlüsselspeichern in den einzelnen Schlüsselspeichersteuereinheiten KMU abgerufen oder Einträge veranlaßt werden können.

Abweichend davon können auch zwei oder mehrere Monoprozessorsysteme mit je einem Speichermodul M, einem Verarbeitungsprozessor CPU und einem Ein-/Ausgabeprozessor IOP und gegebenenfalls einem Anschlußprozessor GSU an einem jeden Knoten zusammengefaßt sein, wobei entweder jedem Verarbeitungsprozessor CPU eine individuelle Schlüsselspeichersteuereinheit KMU oder allen Verarbeitungsprozessoren eine gemeinsame Schlüsselspeichersteuereinheit KMU zugeordnet sein kann. Ebenso könnte der in Verbindung mit der Änderung von Speicherschlüsseln notwendige Informationsaustausch, gesteuert durch das Betriebssystem von einem der Verarbeitungsprozessoren aus, in bekannter Weise über das Arbeitsspeicherverbindungsnetzwerk verlaufen.

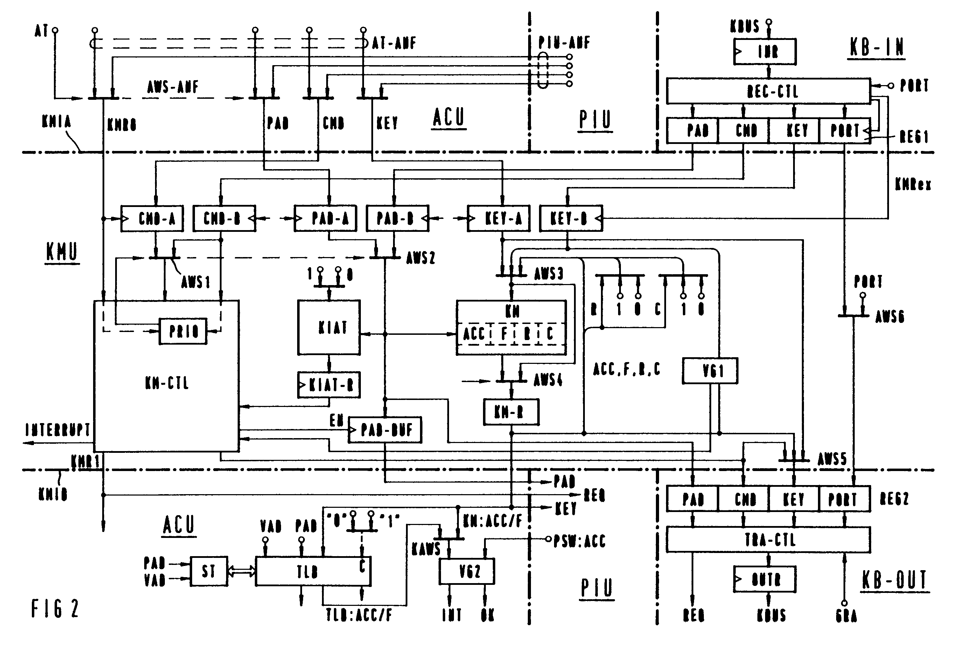

Figur 2 zeigt den Aufbau einer Schlüsselspeichersteuereinheit KMU, die im oberen Teil der Figur über die Eingabeschnittstelle KMIA und im unteren Teil über die Ausgabeschnittstelle KMIB mit der Adreßumsetzungseinheit ACU und über diese auch mit dem steuernden Prozessorteil PIU des Verarbeitungsprozessors CPU verbunden ist, während der rechte Teil der Figur den Anschluß an das gesonderte Verbindungsnetzwerk KBUS mit der ankommenden Schnittstelle KB-IN und der abgehenden Schnittstelle KB-OUT wiedergibt.

Die Ansteuerung sowohl seitens der Adreßumsetzungseinheit ACU und des steuernden Prozessorteils PIU als auch seitens des gesonderten Verbindungsnetzwerkes KBUS erfolgt in einheitlicher Weise durch Bereitstellung der realen Speicherseitenadresse PAD und des auszuführenden Befehls CMD sowie des zugehörigen Schlüsselspeichereintrags KEY. Der Eingabeschnittstelle KMIA sind Auswahlschalter AWS-

4

ANF zur Durchschaltung entweder der Anforderung PIU-ANF des steuernden Prozessorteils PIU oder der Anforderungen AT-ANF der Adreßumsetzungseinheit ACU vorgeschaltet. Eingestellt werden diese Auswahlschalter AWS-ANF durch das Steuersignal AT der Adreßumsetzungseinheit ACU in der Weise, daß im Ruhezustand die Anforderungen des steuernden Prozessorteils PIU durchgeschaltet werden, während bei an die Adreßumsetzungseinheit ACU gerichteten Speicheranforderungen des steuernden Prozessors die Adreßumsetzungseinheit auf die Durchschaltung eigener Anforderungen umsteuert.

Parallel zu den drei Datenwegen für die reale Speicheradresse PAD, den Befehl CMD und den Schlüsseleintrag KEY an der Schnittstelle KMIA weisen auch die Schnittstellen KB-IN und KB-OUT von bzw. zum gesonderten Verbindungsnetzwerk KBUS jeweils drei gleichartige Datenwege auf, und zwar unabhängig davon, in welcher Form diese Daten über das gesonderte Verbindungnetzwerk KBUS übertragen werden.

Im vorliegenden Fall sei unterstellt, daß der Informationsaustausch z.B. mit einer Breite von einem Byte entsprechend acht Bits zuzüglich einem Paritätsbit erfolgt und mehrere Bytes einer auszutauschenden Information seriell nacheinander übertragen werden, um die Anzahl der Signalleitungen für die Verbindungsleitungen im gesonderten Verbindungsnetzwerk KBUS gering zu halten. Ankommend werden daher an der Schnittstelle KB-IN die über das gesonderte Verbindungsnetzwerk eintreffenden Bytes nacheinander in ein Eingangsregister INR übernommen und von einer Empfangssteuerung REC-CTL an die entsprechenden Bereitstellungsregister REG1 übergeben. In analoger Weise werden die über die Schnittstelle KB-OUT an das gesonderte Verbindungsnetzwerk weiterzuleitenden Informationen PAD, CMD und KEY zunächst in entsprechende Bereitstellungsregister REG2 als Zwischenpuffer übertragen und durch eine Übertragungssteuerung TRA-CTL byteweise nacheinander zum Ausgangsregister OUTR durchgeschaltet, wenn ein die Übertragung freigebendes Steuersignal GRA vorliegt. Außerdem löst die Übertragungssteuerung TRA-CTL, z.B. abhängig von der Steuerung KM-CTL, ein Anforderungssignal REQ aus, wenn alle Informationen bereitgestellt sind, um Zugang zum gesonderten Verbindungsnetzwerk KBUS zu erhalten.

Um, wie später noch gezeigt wird, Antwortinformationen für über die Schnittstelle KB-IN entgegengenommene Aufträge an einer in den Bereitstellungsregistern REG2 bereitgestellten aber noch nicht für die Übertragung an das gesonderte Verbindungsnetzwerk freigegebenen Auftraginformation vorbeileiten zu können, sind für die die Antwortinformation bildenden Informationsteile weitere Bereitstellungsregister REG2 vorgesehen, was aber in Figur 2 nicht gesondert dargestellt ist.

Neben den drei Teilinformationen PAD, CMD und KEY wird für die Übertragung von Informationen über das gesonderte Verbindungsnetzwerk KBUS zusätzlich eine vierte Teilinformation PORT durch den Auswahlschalter AWS6 bereitgestellt, die den jeweils auftraggebenden Prozessor kennzeichnet und von den den Auftrag ausführenden Einheiten der jeweiligen Antwort als Zieladresse zugesetzt wird. Diese Teilinformation PORT wird daher bei von einem Knoten ausgehenden Auftragsinformationen als eine den zugehörigen Prozessor kennzeichnende Information zugesetzt und bei über die Schnittstelle KB-IN ankommenden Auftragsinformationen von diesen für die jeweilige Antwortinformation abgeleitet. Außerdem dient die prozessorindividuelle Information der Empfangssteuerung REC-CTL dazu, die für den angeschlossenen Prozessor bestimmten Antwortinformationen zu identifizieren und deren Übernahme in die Bereitstellungsregister REG1 zu veranlassen.

Die ankommenden Schnittstellenleitungen sind jeweils mit entsprechenden Übernahmeregistern CMD-A, PAD-A, KEY-A bzw. CMD-B, PAD-B, KEY-B der Schlüsselspeichersteuereinheit KMU verbunden, wobei die Übernahme beispielsweise durch die Anforderungen begleitende Anforderungssignale KMRO bzw. KMRex gesteuert wird. Eine Vorrangsschaltung PRIO in der Steuerung KM-CTL überwacht das Vorliegen von Anforderungen und wählt die jeweils vorrangige Anforderung aus, indem die den Übernahmeregistern nachgeschalteten Auswahlschalter AWS1 bis AWS3 entsprechend eingestellt werden. Damit steht der jeweilige Befehl CMD einer Anforderung für die Auswertung durch die Steuereinrichtung KM-CTL zur Verfügung und ebenso die jeweils zugehörige reale Seitenadresse PAD für die Ansteuerung des Schlüsselspeichers KM und der gegebenenfalls zu ändernde Eintrag KEY.

Sind im Gegensatz zum Ausführungsbeispiel mehrere Verarbeitungsprozessoren mit einer gemeinsamen Schlüsselspeichereinheit gekoppelt, so vervielfacht sich die Anzahl der Schnittstellen KMIA/KMIB entsprechend, wobei die entsprechend erweiterte Vorrangschaltung PRIO den Zugang zur Schlüsselspeichersteuereinheit KMU steuert.

Der Schlüsselspeicher KM enthält für jeden im Arbeitsspeicher der Datenverarbeitungsanlage geschützten Speicherabschnitt, z.B. in Form einer Speicherseite von jeweils 4 KByte, einen Eintrag, der aus dem eigentlichen Speicherschlüssel ACC, einem Steuerbit F als mögliche Holsperre und zwei Verwaltungsbits R und C besteht, wobei das Bit R bei jedem Speicherzugriff gesetzt wird und das gesetzte Bit C einen schreibenden Speicherzugriff kennzeichnet. Mit einem 256 KByte großen Schlüsselspeicher kann also z.B. ein Arbeitsspeicher mit 1 GByte Speicherkapazität abgedeckt werden.

Der Schlüsselspeicher KM ist mit einem Leseregister KM-R gekoppelt, dessen Ausgang einerseits mit der Ausgabeschnittstelle KMIB und andererseits mit einem Rückkopplungszweig zum Auswahlschalter AWS3 zur Änderung der Steuerbits R und C für einen eingetragenen Schlüssel ACC/F im Schlüsselspeicher KM verbunden ist. Außerdem kann der ins Leseregister KM-R übernommene Speicherschlüssel über den Auswahlschalter AWS5 an die Schnittstelle KB-OUT weitergeleitet oder bei Anforderung durch eine Ein-/Ausgabeeinheit IOP oder GSU über die Schnittstelle KB-IN am gesonderten Verbindungsnetzwerk KBUS einem Vergleicher VG1 zugeführt werden, der den im Übernahmeregister KEY-B verfügbaren Zugriffsschlüssel mit dem gelesenen Speicherschlüssel vergleicht und abhängig vom Prüfergebnis die Steuerung KM-CTL veranlaßt, eine entsprechende Antwort über die Schnittstelle KB-OUT am gesonderten Verbindungsnetzwerk KBUS an die anfragende Ein-/Ausgabeeinheit IOP oder GSU zu liefern.

Über die Ausgabeschnittstelle KMIB kann ein aus dem Schlüsselspeicher KM gelesener Schlüsseleintrag KEY oder Teile desselben in Verbindung mit einem Rückmeldesignal KMR1 der Steuereinrichtung KM-CTL einerseits dem steuernden Prozessorteil PIU und andererseits der Adreßumsetzungseinheit ACU übergeben werden. Zuständiger Empfänger ist dabei immer die Einheit, die die zugehörige Anforderung ausgelöst hat. War die anfordernde Einheit die Adreßumsetzungseinheit ACU, dann wird der gelesene Speicherschlüssel KM:ACC/F gegebenenfalls für den Eintrag in den Adreßumsetzungspuffer TLB und für den Vergleich mit dem vom steuernden Prozessorteil PIU zur Verfügung gestellten Zugriffsschlüssel PSW:ACC benötigt. Dies ist im unteren Teil der Figur angedeutet, der in schematischer Darstellung den Adreßumsetzungspuffer TLB der Adreßumsetzungseinheit ACU mit zugehöriger Steuerung ST zeigt. Die Einträge im Adreßumsetzungspuffer TLB bestehen in bekannter Weise aus von der übrigen Adreßumsetzungssteuerung gelieferten Paaren von virtueller Adresse VAD und zugehöriger realer Adresse PAD, die durch die zugehörigen Speicherschlüssel ACC/F und das Steuerbit C ergänzt sind, während die Funktion des Steuerbits R vom jeweiligen Gültigkeitsbit übernommen wird.

Bei einem bereits im Adreßumsetzungspuffer TLB vorhandenen Eintrag kann abhängig von der virtuellen Adresse VAD neben der zugehörigen realen Adresse PAD unmittelbar auch der zugehörige Speicherschlüssel TLB:ACC ermittelt und für einen Vergleich mit dem vom steuernden Prozessorteil PIU gelieferten Zugriffsschlüssel PSW:ACC/F durch den Vergleicher VG2 herangezogen werden, so daß ein Speicherzugriff mit der ermittelten realen Adresse PAD unmittelbar freigegeben oder verhindert werden kann. Ergibt dagegen die Überprüfung des Adreßumsetzungspuffers TLB, daß noch kein Eintrag vorliegt, dann kann die Überprüfung der Zugriffsberechtigung unmittelbar nach der dann notwendigen Adreßübersetzung anhand des aus dem Schlüsselspeicher KM gelesenen Speicherschlüssels KM:ACC/F vorgenommen werden.

Parallel zum Schlüsselspeicher KM ist ein weiterer Speicher KIAT gleicher Tiefe vorgesehen, der mit der jeweils freigegebenen realen Adresse PAD parallel zum Schlüsselspeicher angesteuert wird. Die Einträge in diesem Speicher KIAT bestehen jeweils aus einem Bit, das im gesetzten Zustand einen zugehörigen Eintrag im Adreßumsetzungspuffer TLB anzeigt. Bei einer Änderung des Schlüssels im Schlüsselspeicher KM infolge des Austausches einer Speicherseite im Arbeitsspeicher kann auf diese Weise unmittelbar erkannt werden, ob durch die Schlüsseländerung ungültig gewordene Einträge im Adreßumsetzungspuffer TLB zu löschen sind oder nicht. Dadurch entfallen in einfacher Weise unnötige, das System belastende Überprüfungen des Adreßumsetzungspuffers auf zu löschende Einträge.

Die Schlüsselspeichersteuereinheit KMU arbeitet befehlsgesteuert durch die mit der jeweiligen Anforderung angelieferten Befehle CMD. Dabei kann abhängig von der anfordernden Quelle zwischen drei Gruppen von Befehlen unterschieden werden, nämlich

a) Befehle der Adreßumsetzungseinheit ACU zur Änderung der Steuerbits im Schlüsselspeicher KM und im Speicher KIAT im Rahmen von Speicherzugriffsanforderungen durch den steuernden Prozessorteil PIU und gegebenenfalls zum Auswerten des Speicherschlüssels bei fehlenden Einträgen im Adreßumsetzungspuffer TLB,

b) Befehle einer Ein-/Ausgabeeinheit IOP oder GSU zur Prüfung der Speicherzugriffsberechtigung anhand des im Schlüsselspeicher KM eingetragenen Speicherschlüssels mit entsprechender Änderung der der Verwaltung dienenden Steuerbits R und C und

c) vom Betriebssystem veranlaßte Befehle eines steuernden Prozessorteils PIU in Verbindung mit der Bereitstellung und der Auslagerung von Speicherseiten im Arbeitsspeicher.

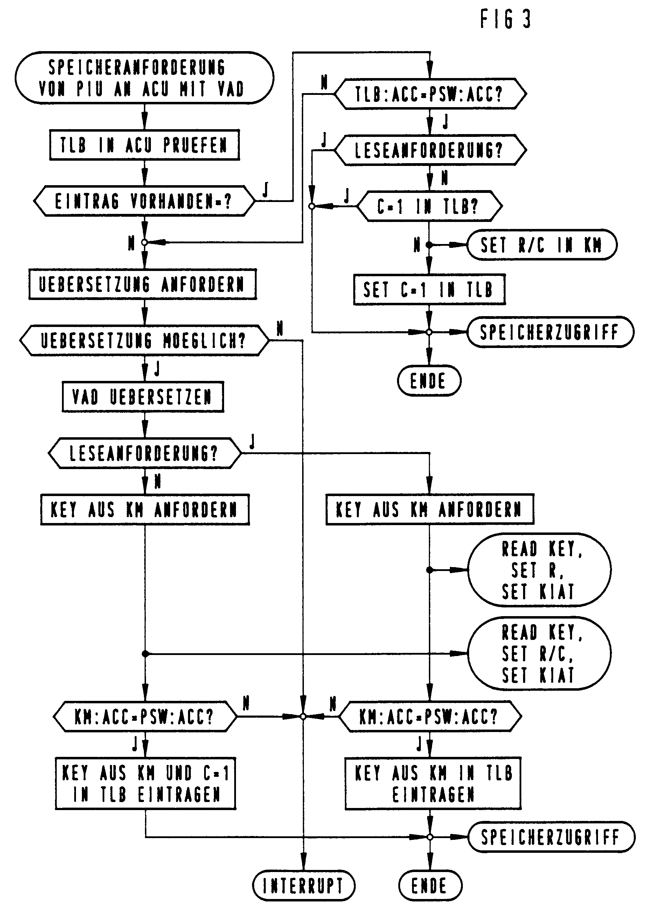

Die Einbettung der Befehle der Adreßumsetzungseinheit ACU in den üblichen Adreßübersetzungsvorgang im Rahmen einer Speicheranforderung ist aus dem Flußdiagramm von Figur 3 ersichtlich. Anhand der mit der Speicheranforderung verbundenen virtuellen Speicheradresse VAD wird zunächst der Adreßumsetzungspuffer TLB auf Vorliegen einer übersetzten realen Adresse PAD zu der virtuellen Adresse überprüft. Liegt noch kein Eintrag vor, wird die Adreßübersetzung angefordert und in bekannter Weise durchgeführt. Unabhängig davon, ob es sich beim gewünschten Speicherzugriff um einen Lese- oder Schreibzugriff

6

handelt, wird anhand der übersetzten Adresse PAD der zugehörige Speicherschlüssel aus dem Schlüsselspeicher KM angefordert, was zu den entsprechenden Befehlen READ KEY... zum Lesen des Speicherschlüssels führt, wobei im Vorgriff bei einer Leseanforderung das Steuerbit R gesetzt wird und bei einer Schreibanforderung beide Steuerbits R und C im Schlüsselspeicher KM gesetzt werden. Außerdem wird im selben Steuervorgang das Steuerbit im Speicher KIAT bereits gesetzt, da bei einem zulässigen Speicherzugriff auch ein Eintrag im Adreßumsetzungspuffer TLB anzulegen ist. Anhand des aus dem Schlüsselspeicher KM gelesenen Speicherschlüssels KM:ACC/F wird dann durch den Vergleicher VG2 anhand des vom steuernden Prozessor PIU gelieferten Zugriffssschlüssels PSW:ACC die Zulässigkeit des Speicherzugriffs überprüft. Ist der Zugriff zulässig, wird ein entsprechender Eintrag im Adreßumsetzungspuffer TLB mit dem gelesenen Speicherschlüssel ACC/F angelegt, wobei im Falle von Schreibzugriffen auch das Steuerbit C gesetzt wird. Außerdem wird der eigentliche Speicherzugriff veranlaßt.

Ist dagegen keine Adreßübersetzung möglich oder die Zugriffsberechtigung nicht gegeben, wird mit INTERRUPT in bekannter Weise in eine Unterbrechungsroutine übergeleitet.

Ist im Adreßumsetzungspuffer TLB bereits ein gültiger Eintrag zu der die Speicheranforderung begleitenden virtuellen Adresse VAD vorhanden, wird die Zugriffsberechtigung unmittelbar anhand des im Adreßumsetzungspuffer TLB eingetragenen Speicherschlüssels TLB:ACC/F überprüft. Liegt eine Schreibanforderung vor, wird außerdem geprüft, ob das Steuerbit C im Adreßumsetzungspuffer bereits gesetzt ist. Ist dies der Fall oder liegt eine Leseanforderung vor, kann bei gegebener Zugriffsberechtigung unmmittelbar der gewünschte Speicherzugriff veranlaßt werden. Im anderen Falle ist die Schlüsselspeichersteuereinheit KMU mit dem Befehl SET R/C anzusteuern und im Adreßumsetzungspuffer TLB das Steuerbit C zu setzen. Das Mitführen des Steuerbits C im Adreßumsetzungspuffer erspart somit ein zusätzliches Ansteuern der Schlüsselspeichersteuereinheit KMU.

Fällt dagegen die Schlüsselüberprüfung anhand des Eintrags im Adreßumsetzungsspeicher TLB negativ aus, dann muß in die übliche Adreßübersetzung entsprechend dem bereits erläuterten linken Ablaufzweig des Flußdiagrammes übergeleitet werden.

Die von der Adreßumsetzungseinheit ACU ausgehenden Befehle gemäß dem Flußdiagramm von Figur 3 betreffen nur die angeschlossene Schlüsselspeichersteuereinheit KMU und haben daher keine Weiterleitung entsprechender Auftragsinformationen an das gesonderte Verbindungsnetzwerk KBUS zur Folge. Anders verhält es sich jedoch mit den vom Betriebssystem ausgehenden Befehlen eines steuernden Verarbeitungsprozessors CPU am eigenen Knoten, die sich an alle Schlüsselspeicher KM im System richten und eine Antwortinformation zur Folge haben, oder mit den über das gesonderte Verbindungsnetzwerk KBUS eintreffenden Auftragsinformationen, die von einem Verarbeitungsprozessor CPU oder einer der Ein-/Ausgabeeinheiten stammen können und ebenfalls zu beantworten sind. Entsprechend unterschiedlich sind die Reaktionen der Steuerung KM-CTL der jeweiligen Schlüsselspeichersteuereinheit KMU.

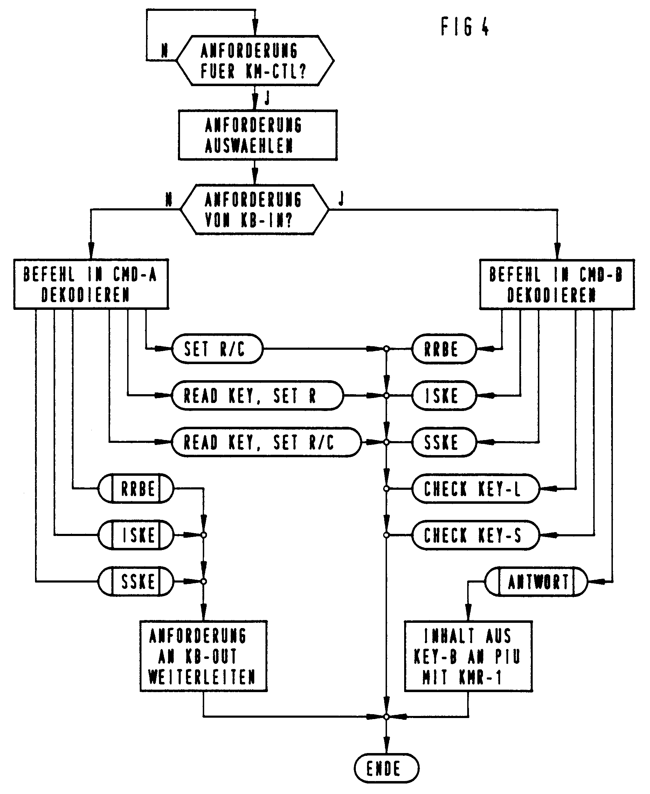

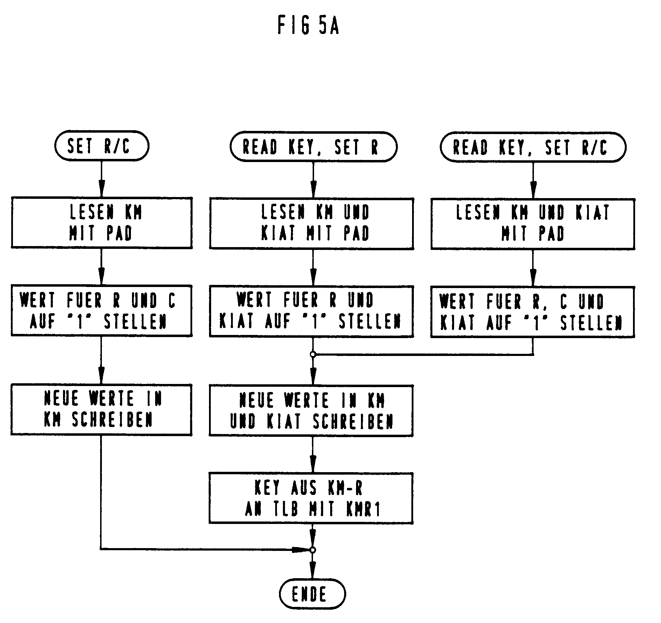

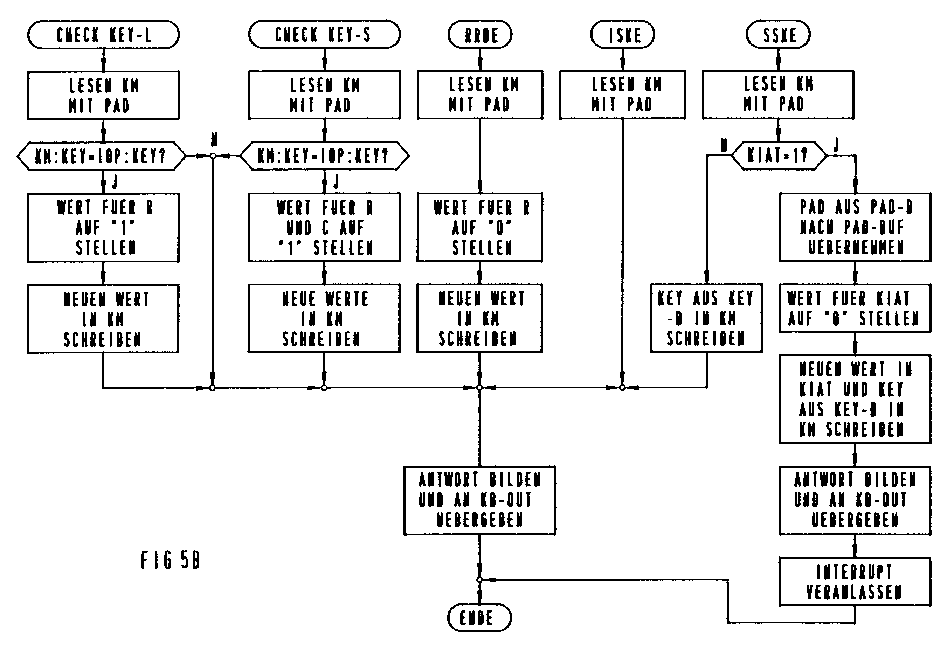

Figur 4 zeigt ein entsprechendes Flußdiagramm zur Erläuterung der von der Steuerung KM-CTL auszuführenden unterschiedlichen allgemeinen Steuerungsabläufe ohne Berücksichtigung der den einzelnen Befehlen CMD individuell zuzuordnenden Steuerungsabläufe, die nachfolgend anhand von Figur 5A und 5B näher beschrieben werden.

Gemäß Figur 4 werden die beiden Schnittstellen KMIA und KB-IN fortlaufend auf das Vorliegen von Anforderungen überwacht. Ist eine Anforderung erkannt, wird bei mehreren gleichzeitigen Anforderungen die jeweils bevorrechtigte ausgewählt und der zugehörige Befehl CMD decodiert und ausgeführt.

Dabei ist entscheidend, ob es sich um eine Anforderung seitens der Schnittstelle KMIA, also um eine vom eigenen Verarbeitungsprozessor ausgehende Anforderung, oder um eine Anforderung seitens der Schnittstelle KB-IN handelt.

Anforderungen seitens der Schnittstelle KMIA beinhalten lediglich Aufträge. Diese können einerseits von der Adreßumsetzungseinheit ACU stammen und die bereits in Verbindung mit Figur 3 angesprochenen Befehle SET R/C, READ KEY-SET R und READ KEY-SET R/C beinhalten, die nur lokal wirken, so daß der Steuerungsablauf mit deren Ausführung beendet ist. Es können aber auch Aufträge des Betriebssystems sein, die sich z.B. auf die Befehle RRBE,ISKE oder SSKE beziehen und sich an alle Schlüsselspeichersteuereinheiten KMU des Systems richten. Diese Befehle werden zunächst nicht als solche ausgeführt, was durch die senkrechten Balken rechts und links von der Befehlsbezeichnung angedeutet ist, sondern haben nur eine Übergabe der entsprechenden Auftragsinformation an die Bereitstellungsregister REG2 in Figur 2 zur Folge.

Wie bereits in Verbindung mit Figur 2 erläutert, führt dies zu einer Anforderung REQ an das gesonderte Verbindungsnetzwerk KBUS durch die Übertragungssteuerung TRA-CTL und nach Zuteilung des Freigabesignals GRA zur Weiterleitung der Auftragsinformation an alle Schlüsselspeichersteuereinheiten des Systems, also auch an die am eigenen Knoten, so daß sie als Anforderungen über die Schnittstelle KB-IN wirksam wird. Erst dann wird der mit dem Befehl RRBE bzw. ISKE bzw. SSKE verbundene befehlsindividuelle Steuerungsablauf auch am eigenen Knoten durchgeführt und damit der erneute Arbeitslauf der Steuerung KM-CTL beendet.

Unterstellt ist dabei, daß alle aufgrund von Anforderungen über die Schnittstelle KB-IN ausgeführten Befehle eine Antwort an das gesonderte Verbindungsnetzwerk zur Folge haben, die wie die Auftragsinformationen in den Bereitstellungsregistern REG2 der Schnittstelle KB-OUT zur Verfügung gestellt und wiederum an alle Verbindungsknoten des gesonderten Verbindungsnetzwerkes KBUS übertragen wird, wobei die mitgeführte Teilinformation PORT bestimmt, über welche Schnittstelle KB-IN die Antwortinformation schließlich weitergeleitet wird. Diese Antworten werden wie eine Anforderung behandelt und beispielsweise anhand einer entsprechenden Bitkombination des mitgeführten Befehls CMD als solche bei der Befehlsdecodierung erkannt. Die Steuerung KM-CTL leitet dann die eigentliche Antwortinformation aus dem Übernahmeregister KEY-B an die Schnittstelle KMIB zum steuernden Prozessorteil PIU weiter, womit der erneut eingeleitete Steuerungslauf endet.

Eine vom Betriebssystem des steuernden Prozessors am eigenen Knoten ausgelöste Anforderung beschäftigt also die Steuerung KM-CTL dreimal, nämlich

1. um die entsprechende Auftragsinformation an das gesonderte Verbindungsnetzwerk KBUS weiterzuleiten,

2. um beim Eintreffen dieser Auftragsinformation über die Schnittstelle KB-IN den entsprechenden Befehl CMD auszuführen und das Ergebnis wiederum als Antwortinformation an das gesonderte Verbindungsnetzwerk KBUS zu übergeben sowie

3. um die wiederum über die Schnittstelle KB-IN eintreffende Antwortinformation an den angeschlossenen Prozessor weiterzuleiten.

Über die Schnittstelle KB-IN eintreffende Anforderungen können weiterhin von den Ein-/Ausgabeeinheiten IOP oder GSU stammen, um mit den Befehlen CHECK KEY... einen Schlüsselvergleich zu veranlassen. Diese Befehle werden wie die bei Anforderungen durch die Adreßumsetzungseinheit ACU unmittelbar ausgeführt. Außerdem bedingen diese Befehle eine Übergabe der entsprechenden Antwortinformation an die Schnittstelle KB-OUT zur Weiterleitung an die anfragende Ein-/Ausgabeeinheit.

Da somit von den Schlüsselspeichersteuereinheiten KMU nicht nur Antwortinformationen aufgrund von eigenen Auftragsinformationen an die Schnittstelle KB-OUT zu übergeben sind, sondern auch Antwortinformationen für andere auftraggebende Einheiten, stellen die in den Schnittstellen KB-OUT der Schlüsselspeichersteuereinheiten KMU getrennt vorgesehenen Bereitstellungsregister REG2 für die Auftragsinformation und die Antwortinformation sicher, daß die Beantwortung einer von einer anderen Einheit stammenden Auftragsinformation trotz einer noch nicht abgerufenen Auftragsinformation abgesetzt werden kann.

Die von den einzelnen Befehlen CMD durch die Steuerung KM-CTL veranlaßten befehlsindividuellen Steuerungsabläufe sind in Figur 5 im einzelnen dargestellt.

Figur 5A zeigt die Steuerungsabläufe für die drei Befehle der Adreßumsetzungseinheit ACU. In allen Fällen wird mit der realen Adresse PAD der Schlüsselspeicher KM und bei den Befehlen READ KEY... auch der Speicher KIAT gelesen. Danach werden die Werte für die zu ändernden Speicherstellen eingestellt und als neue Werte zurückgeschrieben. Bei den Befehlen READ KEY.... wird außerdem der gelesene Speicherschlüssel an den Adreßumsetzungspuffer TLB mit dem Übergabesignal KMR1 weitergeleitet.

In ähnlicher Weise sind die Steuerungsabläufe für die Befehle CHECK KEY... von den Ein-/Ausgabeeinheiten IOP oder GSU gemäß dem linken Teil von Figur 5B gestaltet, wobei nach dem Lesen des Schlüsselspeichers KM zunächst der Schlüsselvergleich durchgeführt wird und Änderungen der Steuerbits im Schlüsselspeicher KM nur bei Schlüsselübereinstimmung ausgeführt werden. Beide Befehlsausführungen enden mit einer Rückmeldung an die anfordernde Ein-/Ausgabeeinheit IOP oder GSU über die Schnittstelle KB-OUT.

Gegenüber den bereits beschriebenen Befehlsabläufen haben die zu den Befehlen RRBE, ISKE und SSKE des Betriebssystems im rechten Teil von Figur 5B nicht unmittelbar mit einer Speicherzugriffsanforderung zu tun. Mit dem Befehl RRBE fragt das Betriebssystem die korrespondierenden Einträge aller Schlüsselspeicher KM periodisch der Reihe nach ab, um zu ermitteln, zu welcher Speicherseite längere Zeit nicht zugegriffen worden ist. Mit jeder Überprüfung werden daher die gelesenen Steuerbits R und C über die Schnittstelle KB-OUT als Antwort an den Verbindungsknoten des steuernden Prozessorteils übertragen, und ein gesetztes Steuerbit R wird jeweils zurückgesetzt. Das Betriebssystem ermittelt auf diese Weise eine Entscheidungsbasis für den Ersetzungsalgorithmus, wenn im Arbeitsspeicher Speicherplatz für eine neue Speicherseite benötigt wird.

Bevor aber eine neue Seite im Arbeitsspeicher ausgetauscht werden kann, muß jedoch geprüft werden, ob die Daten der alten Seite entsprechend der Kennzeichnung C = I verändert worden sind. Bei unveränderter Seite kann diese unmittelbar überschrieben werden, während eine im Arbeitsspeicher geänderte Seite erst ausgelagert werden muß. Das Betriebssystem prüft dies gezielt mit dem Befehl ISKE, indem jeweils der gesamte zugehörige Eintrag in den Schlüsselspeichern KM gelesen und über die Schnittstelle KB-OUT an den Verbindungsknoten des steuernden Prozessors übertragen wird.

Schließlich wird beim Austausch einer Seite im Arbeitsspeicher der zugehörige Schlüsseleintrag in den Schlüsselspeichern KM ungültig und ist daher durch den für die neue Seite zu ersetzen. Hierzu dient der Befehl SSKE, bei dem zunächst anhand der Einstellung durch die reale Seitenadresse PAD der Speicher KIAT gelesen wird. Ist das gelesene Steuerbit nicht gesetzt, wird der in der Auftragsinformation enthaltene Schlüsselspeichereintrag einschließlich der auf Null gesetzten Steuerbits R und C unmittelbar in den Schlüsselspeicher KM eingetragen. Liegt dagegen im Speicher KIAT eine Kennzeichnung vor, wird zunächst die im Übernahmeregister PAD-A stehende reale Seitenadresse PAD in das Register PAD-BUF übertragen. Anschließend wird die Kennzeichnung für den Speicher KIAT auf "O" gestellt, bevor die Einträge in beiden Speichern erneuert werden. Außerdem wird unabhängig von der Kennzeichnung im Speicher KIAT eine Quittung als Antwort über die Schnittstelle KB-OUT weitergeleitet und im Falle KIAT = l eine lokale Unterbrechungsanforderung INTERRUPT veranlaßt, damit anhand der ermittelten realen Seitenadresse die Überprüfung des Adreßumsetzungspuffers TLB durchgeführt und durch Löschen der betroffenen Einträge die Übereinstimmung mit dem im Eintrag im Schlüsselspeicher KM gesichert werden kann.

Anhand der bisher beschriebenen Steuerungsabläufe für die Schlüsselspeichersteuereinheiten KMU ist ersichtlich, daß bei den sehr häufig vorkommenden Schlüsselüberprüfungen im Rahmen von Speicherzugriffen die Steuerbits R und C nur im zuständigen knotenindividuellen Schlüsselspeicher KM geändert werden, nicht aber in den übrigen Schlüsselspeichern des Systems. Dadurch wird zwar zugelassen, daß die korrespondierenden Einträge in den einzelnen Schlüsselspeichern KM bezüglich der Steuerbits mit der Zeit auseinanderlaufen und damit inkonsistent werden. Die Auswirkung dieser Inkonsistenz läßt sich aber mit dem vom Betriebssystem ausgehenden Befehl RRBE, der das Lesen der Steuerbits parallel bei allen Schlüsselspeichern bewirkt, ohne weiteres beheben, wenn für die Antwort alle Leseergebnisse zu einem Leseergebnis durch Oderung zusammengefaßt werden. Das gestaltet zwar die Befehlsausführung aufwendiger, jedoch wird das Verbindungsnetzwerk erheblich entlastet, da der Befehl RRBE viel seltener auszuführen ist, als die wesentlich häufiger auszuführenden Befehle mit Änderung der Steuerbits im Rahmen von Speicherzugriffen.

Auch ermöglicht die Aufteilung der Befehlsausführungen für die vom Betriebssystem ausgehenden Befehle RRBE, SSKE und ISKE in getrennte Steuerungsabläufe mit entsprechenden Anforderungen an die Schlüsselspeichersteuereinheit KMU am anfordernden Knoten in einfacher Weise eine Kontrolle des Ausführungsablaufes und eine Verlagerung der Antwortbiljung bei von mehreren anderen Verbindungsknoten zu berücksichtigenden Antworten auf das gesonderte Verbindungsnetzwerk, wo die Antwortbildung leichter in den Steuerungsablauf integriert werden kann, wie noch gezeigt werden wird.

So erhält die auftraggebende Steuereinheit durch die Rückkopplung der eigenen Auftragsinformation gleichzeitig eine Quittung dafür, daß die Anforderung über das gesonderte Verbindungsnetzwerk ordnungsgemäß weitergeleitet worden ist und bearbeitet wird, und durch die darauffolgende Antwortinformation zugleich eine Quittungsanzeige, ob ein Auftrag fehlerfrei ausgeführt worden ist. Damit jedoch die jeweilige Antwort einer Anforderung eindeutig zugeordnet werden kann, darf ein Prozessor jeweils nur dann eine neue Anforderung stellen, wenn er die Antwort auf eine vorherige Anforderung erhalten hat. Andererseits können die Schlüsselspeichersteuereinheiten KMU nach der Weiterleitung einer Anforderung an das Verbindungsnetzwerk KBUS ohne weiteres über das Verbindungsnetzwerk eintreffende andere Anforderungen bearbeiten, wobei das Verbindungsnetzwerk KBUS ebenso jeweils nur eine von mehreren vorliegenden Anforderungen annimmt, wenn die vorhergehende beantwortet ist.

Damit sind zwar einige Steuerbedingungen für das gesonderte Vermittlungsnetzwerk vorgegeben, im übrigen aber kann dieses frei und den jeweiligen Leistungsanforderungen angepaßt gestaltet werden.

Bei dem dem Ausführungsbeispiel zugrundegelegten gesonderten Verbinoungsnetzwerk ist jeder Verbindungsknoten, an den jeweils die knoteneigenen Prozessoren CPU/KMU, IOP und GSU über gleichartige Schnittstellen KB-IN/KB-OUT angeschlossen sind, durch bidirektional arbeitende Verbindungsleitungen mit allen anderen Verbindungsknoten verbunden. Dadurch können Informationen einerseits als Aufträge von einem Verbindungsknoten aus gleichzeitig an alle anderen Verbindungsknoten und andererseits als Antworten von allen Verbindungsknoten aus gleichzeitig an alle anderen Verbindungsknoten übertragen werden, was die Befehlsausführung insgesamt wesentlich beschleunigt.

Um dennoch den Aufwand gering zu halten, ist die Anzahl der Signalleitungen je Richtung begrenzt, z.B. auf neun Signalleitungen entsprechend der parallelen Übertragung jeweils eines paritätsgesicherten Datenbytes und serieller Übertragung aufeinanderfolgender Datenbytes.

Alle Verbindungsknoten erhalten also jeweils alle Auftrags- und Antwortinformationen. Dieses Prinzip läßt sich bei gleichem Aufbau für alle Verbindungsknoten in einfacher Weise auch für die Überwachung von Anforderungen und zur Freigabesteuerung des Informationsaustausches nutzen, so daß jeder Verbindungsknoten in vorteilhafter Weise als Masterknoten arbeiten kann, der den einzelnen Prozessoren an den einzelnen Verbindungsknoten die Berechtigung zum Informationsaustausch erteilt. Die damit verbundene Redundanz erhöht einerseits die Ausfallsicherheit und sichert andererseits die notwendigen Konfigurationsmöglichkeiten.

Von mehreren gleichzeitig an einem Verbindungsknoten entstehenden Anforderungen wird jeweils nur eine wirksam. Ist der Verbindungsknoten nicht zugleich der Masterknoten, dann wird sie parallel über alle abgehenden Verbindungsleitungen und damit auch dem Masterknoten mitgeteilt. Der Masterknoten sendet dagegen ein Freigabesignal jeweils nur an den der jeweils ausgewählten Anforderung entsprechenden Verbindungsknoten. Dadurch kann in Verbindung mit der Netzgestaltung die Anzahl der für die Weiterleitung der Anforderungs- und Freigabesignale benötigten Signalleitungen auf eine zusätzliche Signalleitung in jeder Richtung je Verbindungsleitung beschränkt bleiben. Ist ein Verbindungsknoten der Masterknoten, dann werden in ankommender Richtung nur Anforderungssignale empfangen und in abgehender Richtung nur Freigabesignale ausgesendet, während an jedem anderen Verbindungsknoten über die abgehenden Verbindungsleitungen nur Anforderungssignale weitergeleitet werden und von allen ankommenden Signalleitungen nur die vom Masterknoten kommende Signalleitung als einziges Signal das Freigabesignal liefert. Der Aufwand für die Berechtigungssteuerung ist daher trotz des Maschennetzwerkes mit der Vielzahl von möglichen Masterknoten nicht wesentlich größer als bei einem BUS-System.

Trotz der nur einen Signalleitung je Richtung ist durch Wahl eines entsprechenden Signalisierungsverfahrens, z.B. durch Pulslängencodierung, auch eine prozessortypbezogene Bewertung einer Anforderung am jeweiligen Masterknoten möglich.

Damit im vorliegenden Fall die jeweils zu übertragene umfangreiche Auftragsinformation, bestehend aus dem Befehl CMD, der realen Speicheradresse PAD, dem Schlüsseleintrag KEY und der Teilinformation PORT, bei der Umsetzung in die serielle Übertragungsbytefolge in einfacher Weise auch zur Steuerung herangezogen werden kann, wird beispielsweise die aus Tabelle 1 ersichtliche Aufteilung durch die Übertragungssteuerung TA-CTL in den Schnittstellen KB-OUT der Prozessoren vorgenommen:

Tabelle 1

| BYTE | LK-Signalleitung | | | | | | | | |
| | 1 | 2 | 3 | 4 | 5 | 6 | 7 | 8 | 9 |
| --- | --- | --- | --- | --- | --- | --- | --- | --- | --- |
| 1 | CMD0...2 | | | PORT | | | | P0 | / |
| 2 | PAD1...7 | | | | | | | P1 | / |
| 3 | PAD8...14 | | | | | | | P2 | / |
| 4 | PAD15...19 | | | | | CMD3,4 | | P3 | / |
| 5 | ACC | | | F | R | C | | P4 | / |

Von den jeweils neun Signalleitungen werden nur acht für den Informationsaustausch entsprechend einer Bytebreite benutzt, während die neunte Signalleitung dem Austausch der Anforderungs- und Freigabesignale zwischen den Verbindungsknoten vorbehalten ist. Jedes Byte besteht dabei aus sieben Datenbits und einem Paritätsbit P.... Das erste Byte wird von den ersten drei Befehlsbits CMD0...2 und von den vier Bits der Teilinformation PORT gebildet, so daß es in einfacher Weise zu Steuerungszwecken genutzt werden kann.

Tabelle 2

| TYP | CMD<br>0   1   2 | | | BEFEHLSGRUPPE | KMU-ANT-<br>WORTEN VON |
|---|---|---|---|---|---|
| AUF-<br>TRAG | 0 | 0 | 1 | RRBE, SSKE, ISKE | ALLEN |
| | 0 | 1 | 0 | CHECK KEY... | EINER |
| | 0 | 1 | 1 | SONDERBEFEHLE | ALLEN |
| | 1 | 0 | 0 | READ KEY GEZIELT... | EINER |
| ANT-<br>WORT | 1 | 1 | 0 | FERHLERFREI | |
| | 1 | 1 | 1 | FEHLERHAFT | |

Bei der sich aus Tabelle 2 ergebenden Codierung für die ersten drei Bitstellen des Befehlscodes läßt sich beispielsweise unterscheiden, ob es sich um eine Auftrags- oder eine Antwortinformation handelt und ob letztere fehlerfrei gebildet worden ist oder nicht. Außerdem läßt sich erkennen, ob im Rahmen einer Auftragsinformation, die über das gesonderte Verbindungsnetzwerk weitergeleitet wird, eine Antwort von nur einem anderen Verbindungsknoten oder von allen anderen Verbindungsknoten erwartet wird, wobei im letzteren Fall aus mehreren Antworten eine gemeinsame Antwort zu bilden ist. Auch kann das Eintreffen von Informationen beim jeweiligen Empfänger anhand der Befehlsbitkombination entsprechend der Bedingung CMD0 v CMD1 v CMD2 = 1 in einfacher Weise erkannt werden.

Weiterhin ermöglicht die Teilinformation PORT im ersten Byte einer Auftragsinformation die unverzügliche Überprüfung der Zuständigkeit für den Auftrag anhand der in jedem Knoten vorliegenden Konfigurationsinformation.

Jede Auftragsinformation wird als Folge von fünf Bytes übertragen, wobei das letzte Byte den vollständigen Schlüsseleintrag wie im Schlüsselspeicher KM umfaßt.

Die Antwortinformationen bestehen jeweils aus nur zwei Bytes, die dem ersten und fünften Byte der Auftragsinformation entsprechen, so daß sich dafür der aus Tabelle 3 ersichtliche allgemeine Aufbau ergibt:

Tabelle 3

| BYTE | LK-SIGNALLEITUNG | | | | | | | | |
|---|---|---|---|---|---|---|---|---|---|
| | 1 | 2 | 3 | 4 | 5 | 6 | 7 | 8 | 9 |
| 1 | CMD0...2 | | | PORT | | | | PO | / |
| 2 | ACC | | | OK | R | C | P1 | | / |

Die Teilinformation PORT kennzeichnet in diesem Falle immer den auftraggebenden Prozessor, der als Empfänger auf Antwort wartet, und die Befehlsbits CMD0...2 bestehen gemäß Tabelle 2 immer aus einer der Bitkombinationen 110 oder 111.

Bei den Antworten für die verschiedenen Befehle werden im zweiten Byte jedoch nur die jeweils relevanten Bitstellen genutzt und alle anderen Datenbitstellen mit einer logischen Null belegt. Die vollständige Nutzung entsprechend Tabelle 3 ist daher nur bei den Befehlen READ KEY GEZIELT... gegeben, während beim Befehl RRBE nur die Bitstellen für die Steuerbits R und C und beim Befehl CHECK KEY...

die Bitstelle für das Steuerbit F mit OK = l für einen erlaubten und mit OK = O für einen unerlaubten Zugriff benutzt wird. In allen anderen Fällen beinhaltet das zweite Byte keine relevante Information. Es handelt sich bei diesen Antworten um reine Quittungen.

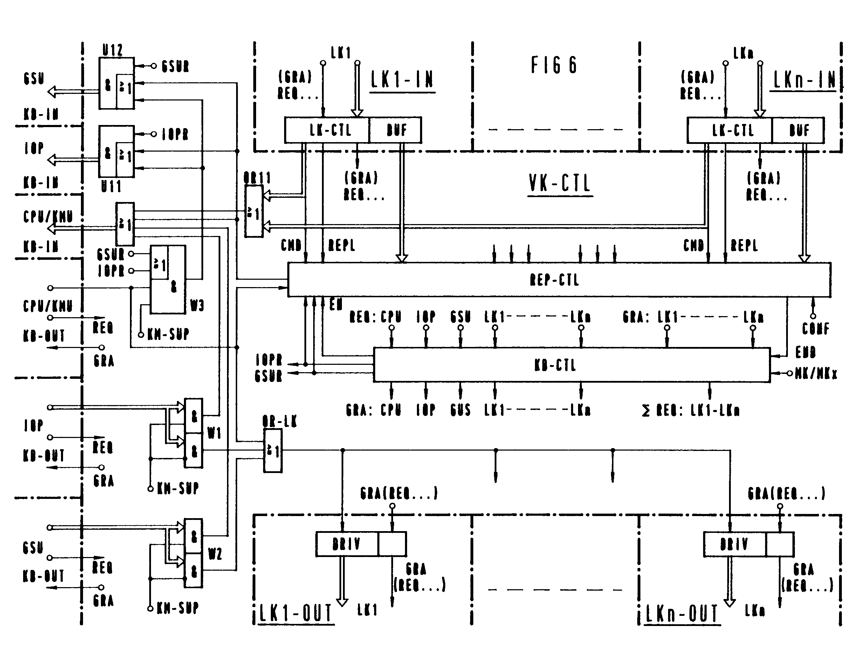

Figur 6 zeigt das Blockschaltbild eines Verbindungsknotens in einem solchen Verbindungsnetzwerk. Im linken Teil der Figur sind die Anschlüsse zu den Schnittstellen KB-OUT/KB-IN der am Verbindungsknoten angeschlossenen Prozessoren CPU/KMU, IOP und GSU dargestellt, während der rechte obere Teil ankommend die Schnittstellen LK1-IN bis LKn-IN und der rechte untere Teil abgehend die Schnittstellen LK1-OUT bis LKn-OUT für die einzelnen Verbindungsleitungen LK1 bis LKn mit den anderen Verbindungsknoten des Verbindungsnetzwerkes zeigt.

Die Verbindungsleitungen LK... werden ankommend durch die Empfangssteuerungen LK-CTL in den Schnittstellen LK1-IN bis LKn-IN überwacht, die in bekannter Weise das Eintreffen von Signalen und Informationen überwachen, Anforderungssignale REQ... oder Freigabesignale GRA erkennen und abhängig vom mitgeführten Befehlscode CMD Auftragsinformationen sofort weiterleiten, während Antwortinformationen im Speicher BUF gespeichert werden. Die direkt weiterzuleitenden Auftragsinformationen werden über ein ODER-Glied OR11 gebündelt und der Schnittstelle KB-IN für den einzigen Auftragsempfänger CPU/KMU am Verbindungsknoten zugeleitet, während die Antwortinformation aus den einzelnen Speichern BUF einer Antwortüberwachungssteuerung REP-CTL zugeführt werden, die abhängig von der Konfigurationsinformation CONF, den Signalen IOPR, GSUR und EN sowie gegebenfalls dem Befehl CMD der jeweiligen Auftragsinformation überwacht, ob alle benötigten Antworten eingetroffen sind. Ist dies der Fall, wird bei mehreren Antworten durch einfache Oderung der benötigten Informationsteile eine gemeinsame Antwort gebildet. Die jeweilige Antwort wird dann parallel an alle Prozessorschnittstellen KB-IN am Verbindungsknoten übertragen.

In abgehender Richtung bestehen die Schnittstellen für die einzelnen Verbindungsleitungen LK... lediglich aus Leitungstreibern DRIV, denen die Informationen aller drei Prozessorschnittstellen KB-OUT am Verbindungsknoten über ein ODER-Glied OR-LK parallel zugeführt werden. Außerdem wird abhängig vom Betrieb als Masterknoten entsprechend MK = l oder als sonstiger Knoten entweder ein individuelles Freigabesignal GRA über eine vorgegebene Verbindungsleitung oder aber das Anforderungssignal REQ... parallel über alle Verbindungsleitungen LK... weitergeleitet.

Unterstellt man, daß die Ein-/Ausgabeeinheiten IOP und GSU an einem Verbindsknoten in der Regel mit der Schlüsselspeichersteuereinheit KMU am eigenen Verbindungsknoten zusammenarbeiten, dann braucht man Auftragsinformationen der Ein-/Ausgabeeinheiten nicht an die Verbindungsleitungen LK... weiterzuleiten, wenn die Schlüsselspeichersteuereinheit am eigenen Verbindungsknoten verfügbar ist. Zu diesem Zweck sind am Ausgang der zugehörigen Schnittstellen Weichen W1 bzw. W2 vorgesehen, die abhängig vom Signal KM-SUP einen Kurzschlußweg zur Schlüsselspeichersteuereinheit KMU wirksam schalten oder bei nicht verfügbarer Schlüsselspeichersteuereinheit die Auftragsinformation an die Verbindungsleitungen LK... weiterleiten. Außerdem ist der Ausgang der Schnittstelle KB-OUT der Schlüsselspeichersteuereinheit KMU abhängig vom Signal KM-SUP über die Weiche W3 direkt zu den Eingängen der Schnittstellen KB-IN der Ein-/Ausgabeeinheiten IOP und GSU durchschaltbar, wenn entsprechend den Signalen IOPR oder GSUR ein Auftrag von diesen gestellt wurde und daher zu beantworten ist. Der Vorteil dieser Kurzschlußwege wird später noch erläutert werden.

Kernstück für die Steuerung des Informationsaustausches im gesonderten Verbindungsnetzwerk KBUS ist die Anforderungs- und Freigabesteuerung KB-CTL, der im Falle eines Masterknotens alle an den Schnittstellen KB-OUT und LK...-IN eintreffenden Anforderungssignale REQ... zugeführt werden und die aufgrund einer ausgewählten Anforderung ein individuelles Freigabesignal GRA zuteilt. Ist der Verbindungsknoten kein Masterknoten, dann werden nur die Anforderungen der Prozessoren am eigenen Verbindungsknoten überwacht und eine davon ausgewählte parallel über alle Verbindungsleitungen LK... weitergeleitet. Anschließend wird ein über die Verbindungsleitung vom Masterknoten eintreffendes Freigabesignal GRA an die jeweils zugehörige Prozessorschnittstelle KB-OUT weitergeleitet, das die Übertragung der in den Bereitstellungsregistern REG2 zwischengespeicherten Auftragsinformationen veranlaßt.

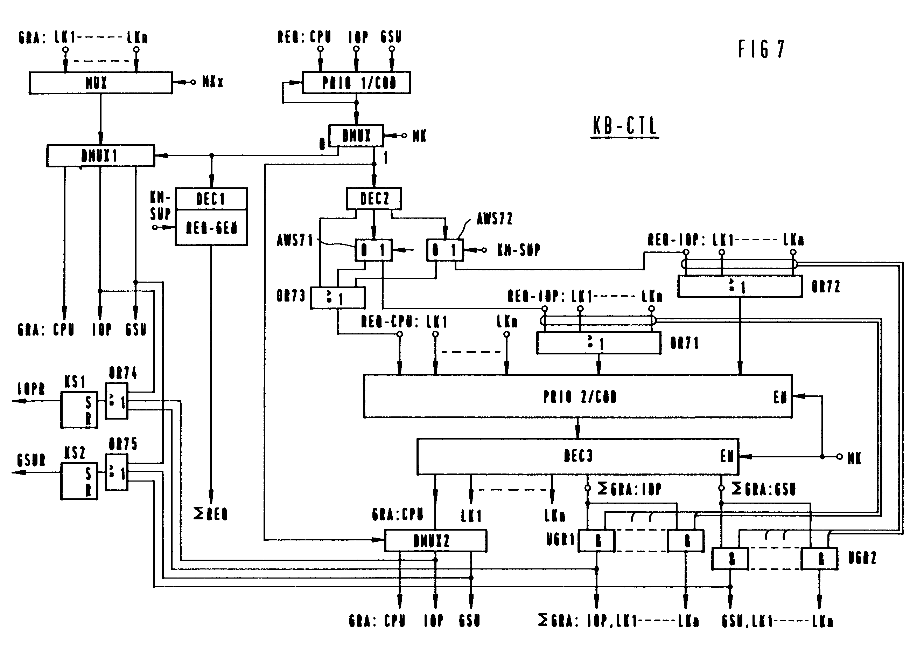

Figur 7 zeigt das Blockschaltbild einer solchen Anforderungs- und Freigabesteuerung KB-CTL. Anforderungen REQ der am Verbindungsknoten angeschlossenen Prozessoren CPU/KMU, IOP und GSU werden von der Auswahlsteuerung PRIO1/COD entgegengenommen und gespeichert. Jeweils eine der Anforderungen wird ausgewählt und eine entsprechende codierte Kennzeichnung gebildet. Abhängig davon, ob der Verbindungsknoten zugleich als Masterknoten (MK = l) arbeitet oder nicht (MK = O), wird entsprechend dem Signal MK der Auswahlschalter DMUX eingestellt und die gültige Anforderungsinformation an den linken oder rechten Schaltungsteil weitergeleitet. Ist der Verbindungsknoten kein Masterknoten (MK = O), wird über den Decoder DEC1 der Anforderungsgenerator REQ-GEN angesteuert und ein den anfordernden Prozessor kennzeichnendes Anforderungssignal ΣREQ erzeugt, das parallel über alle Verbindungsleitungen LK...

weitergeleitet wird.

Über die ankommenden Verbindungsleitungen LK1 bis LKn können mit einer Ausnahme sowohl Anforderungs- als auch Freigabesignale eintreffen. Lediglich über die vom Masterknoten kommende Verbindungsleitung kann als einziges Signal ein Freigabesignal GRA eintreffen, da der Masterknoten selbst keine Anforderungssignale aussendet. Entsprechend wird durch den Auswahlschalter MUX abhängig von der Kennzeichnung des zuständigen Masterknotens MKx die zugehörige ankommende Verbindungsleitung LKx ausgewählt und über einen von der Kennzeichnung durch die Auswahlsteuerung PRIO1/COD eingestellten Schalter DEMUX1 das eintreffende Freigabesignal GRA dem ausgewählten Prozessor am Verbindungsknoten zugeordnet und an die zugehörige Schnittstelle KB-IN weitergeleitet.

Handelt es sich dagegen entsprechend der Signalisierung MK = I um einen Masterknoten, dann werden nicht nur die am Verbindungsknoten entstehenden Anforderungen, sondern auch alle über die Verbindungsleitungen LK... eintreffenden Anforderungen REQ entgegengenommen und gespeichert, was nicht gesondert dargestellt ist. Alle Anforderungen werden der Auswahlsteuerung PRIO2/COD zugeführt, wobei eine durch die Kurzschlußwege in den einzelnen Verbindungsknoten mögliche Parallelarbeit der Ein-/Ausgabeeinheiten IOP bzw. GSU berücksichtigt ist und Anforderungen aus diesen beiden Gruppen gruppenweise durch die ODER-Glieder OR71 bzw. OR72 vorher zu je einer Anforderung gebündelt werden. Die Auswahlsteuerung PRIO2/COD wählt wiederum eine der anstehenden Anforderungen aus und ermittelt ein entsprechendes codiertes Kennzeichen, das über den Decodierer DEC3 in individuelle Freigabesignale GRA für die einzelnen Verarbeitungsprozessoren CPU/KMU und in Gruppenfreigabesignale ΣGRA für die Ein-/Ausgabeeinheiten IOP bzw. GSU umgewandelt wird. Diese Gruppenfreigabesignale ΣGRA werden, gesteuert durch nachgeschaltete UND-Glieder der Gruppen UGR1 bzw. UGR2, jeweils nur an die Einheiten oder Verbindungsleitungen weitergeleitet, für die Anforderungen REQ vorliegen.

In analoger Weise könnten auch alle Ein-/Ausgabeeinheiten IOP und GSU zu einer einzigen statt zu zwei Gruppen zusammengefaßt werden, wobei die jeweils lokale Auswahlsteuerung PRIO1/COD an den einzelnen Verbindungsknoten entscheidet, welcher lokalen Einheit IOP oder GSU das über den Auswahlschalter MUX eintreffende Freigabesignal GRA durch den Auswahlschalter DMUX1 zuzuordnen ist.

Da nicht immer vorausgesetzt werden kann, daß für die Ein-/Ausgabeeinheiten IOP und GSU die Schlüsselspeichersteuereinheit KMU am eigenen Verbindungsknoten verfügbar ist, und daher eine Schlüsselspeichersteuereinheit an einem anderen Verbindungsknoten angesteuert werden muß, ist in diesem Falle keine Parallelarbeit mit anderen Einheiten derselben Gruppe möglich. Die Anforderung dieser Einheiten werden dann als CPU-Anforderungen behandelt und als solche gekennzeichnet. Ist der Verbindungsknoten kein Masterknoten, steuert das Signal KM-SUP = O den Anforderungsgenerator REQ-GEN entsprechend. Im Masterknoten wird daher eine solche über eine Verbindungsleitung eintreffende Anforderung als CPU-Anforderung eingeordnet und individuell behandelt. Andererseits wird das entsprechende Freigabesignal GRA im anfordernden Verbindungsknoten durch den Schalter DEMUX1 wieder der richtigen Einheit zugeordnet.

Im Masterknoten entstehende Anforderungen werden dagegen über den Auswahlschalter DMUX einem Decoder DEC2 zugeführt, damit eine entsprechende Zuordnung zu den einzelnen Gruppen von Anforderungen möglich ist. Die individuellen Ausgänge für die Ein-/Ausgabeeinheiten IOP und GSU werden dabei über vom Signal KM-SUP einstellbare Schalter AWS71 bzw. AWS72 entweder dem jeweiligen ODER-Glied OR71 bzw. OR72 der jeweiligen Gruppe oder über das ODER-Glied OR73 der CPU-Gruppe zugeordnet. Wählt nachfolgend die Auswahlsteuerung PRIO2/COD die CPU-Anforderung vom eigenen Verbindungsknoten aus, wird das entsprechende Freigabesignal ΣGRA:CPU durch den nachgeschalteten Schalter DEMUX2 analog dem Schalter DEMUX1 abhängig vom entsprechenden Kennzeichen am Ausgang des Auswahlschalters DMUX der jeweils betroffenen Einheit zugeordnet, wobei die einander entsprechenden Signalausgänge für die einzelnen Prozessoren CPU bzw. IOP bzw. GSU jeweils über ein nicht dargestelltes ODER-Glied zusammengefaßt werden.

Damit bei einer Parallelarbeit der beiden Gruppen IOP bzw. GSU sichergestellt werden kann, daß die Antworten jeweils der Einheit der freigegebenen Gruppe zugeordnet werden, wird von allen Freigabesignalen GRA für die Einheiten IOP bzw. GSU jeweils über ein ODER-Glied OR74 bzw. OR75 eine gruppenindividuelle Kippstufe KS1 bzw. KS2 gesetzt, deren Ausgangssignale IOPR bzw. GSUR jeweils den Eingängen der Schnittstellen KB-IN vorgeschaltete UND-Glieder U11 bzw. U12 steuern und jeweils die Weiche W3 am Ausgang der Schnittstelle KB-OUT der Schlüsselspeichersteuereinheit KMU auf den Kurzschlußweg umschalten (Figur 6).

Wie bereits erwähnt, werden Antworten von allen parallel angesteuerten Schlüsselspeichersteuereinheiten KMU an jeweils alle anderen Verbindungsknoten übertragen, so daß alle Verbindungsknoten jeweils alle Antworten erhalten. Diese Antworten einschließlich der von der Schlüsselspeichersteuereinheit am eigenen Verbindungsknoten werden jeweils im Masterknoten und in dem Verbindungsknoten, der ein Freigabesignal

13

GRA erhalten hat, von der dortigen Antwortüberwachungssteuerung REP-CTL überwacht. Die Freigabe erfolgt durch das Signal EN der jeweiligen Auswahl- und Freigabesteuerung KB-CTL, das in einfacher Weise durch eine nicht dargestellte weitere Kippstufe erzeugt wird, der die Freigabesignale für alle an den Verbindungsknoten angeschlossenen Einheiten CPU/KMU, IOP und GSU als Setzsignale zugeführt werden.

Weitere Steuersignale für die Antwortüberwachungssteuerung REP-CTL sind die von den Kippstufen KS1 und KS2 gelieferten Signale IOPR und GSUR, die anzeigen, daß jeweils nur eine Antwort von einer der Schlüsselspeichersteuereinheiten zu erwarten ist. Sind diese Signale dagegen nicht wirksam, dann sind in der Regel Antworten von allen durch die Konfigurartionsinformation CONF als vorhanden gekennzeichneten Schlüsselspeichersteuereinheiten KMU des Systems abzuwarten, um eine gemeinsame Antwort bilden zu können. Eine Ausnahme von dieser Regel ist jedoch gegeben, wenn wegen Ausfalls eines Schlüsselspeichers ein Verarbeitungsprozessor CPU auf einen anderen Schlüsselspeicher an einem anderen Verbindungsknoten zurückgreifen muß und daher nur eine Antwort zu erwarten ist. Dieser Fall ist beispielsweise durch den gesonderten Befehl "READ KEY GEZIELT" erkennbar, so daß auch die Befehle CMD der Auftragsinformation von der Antwortüberwachungssteuerung REP-CTL auszuwerten sind.

Eine entsprechend den jeweils gegebenen Randbedingungen arbeitende Schalterkombination überwacht daher die bei Eintreffen einer Antwortinformation von der jeweiligen Empfangssteuerung LK-CTL erzeugten Antwortsignale REPL. Liegen alle benötigten Antworten vor, wird im betroffenen Knoten die einzige oder die gebildete gemeinsame Antwortinformation an die jeweilige Schnittstelle KB-IN des auf Antwort wartenden Prozessors am Verbindungsknoten weitergeleitet und danach sowohl im betroffen Verbindungsknoten als auch im Masterknoten der Auswahl- und Freigabesteuerung KB-CTL mit dem Signal END das Ende des freigegebenen Informationsaustausches mitgeteilt, was zum Löschen der jeweils gespeicherten zugehörigen Anforderung und damit zur Freigabe des nächsten Auswahlvorganges für eine vorliegende Anforderung führt.

Die für die Steuerung des Informationsaustausches in den Verbindungsknoten und den Schnittstellen benötigten Prozessorkennzeichen, wie z.B. die Teilinformation PORT, oder Zuordnungskennzeichen, um von einem vorgegebenen Prozessor stammende Auftragsinformationen von einer vorgegebenen Schlüsselspeichersteuereinheit beantworten zu lassen, sowie die übrigen Konfigurationsinformationen und die Kennzeichnung des Masterknotens können in an sich bekannter Weise durch eine übergeordnete Steuerung, z.B. durch den Serviceprozessor, vorgegeben und in entsprechenden Registern abgespeichert werden.

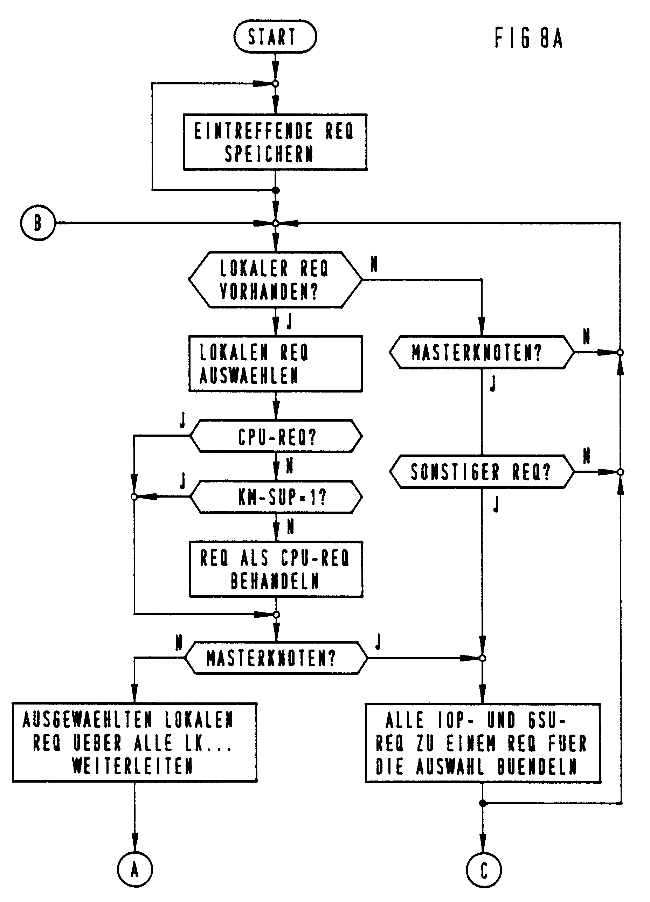

Figur 8A bis 8C geben in Form eines Flußdiagramms den Steuerungsablauf innerhalb eines Verbindungsknotens wieder. In jedem Verbindungsknoten werden gemäß Figur 8A zunächst die eintreffenden Anforderungen REQ gespeichert. Liegt eine lokale Anforderung vor, wird zunächst eine davon ausgewählt und im Falle einer Anforderung von einer der Ein-/Ausgabeeinheiten geprüft, ob diese Anforderung als CPU-Anforderung zu behandeln ist. Danach wird die ausgewählte prozessorbezogene Anforderung bei einem fremden Masterknoten parallel über alle abgehenden Verbindungsleitungen LK... weitergeleitet und auf das Eintreffen des Freigabesignals GRA gewartet.

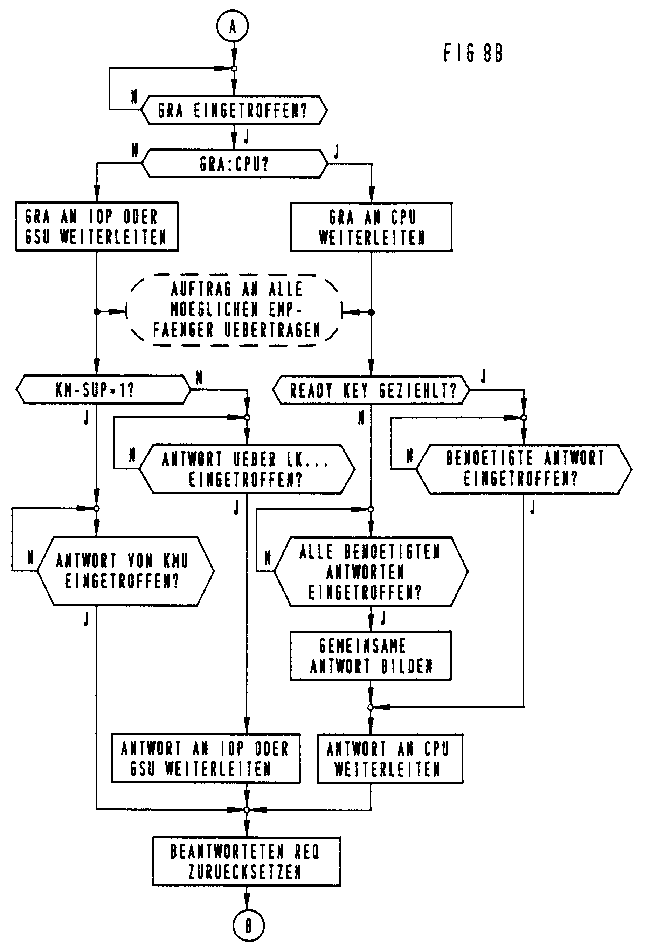

Sobald das Freigabesignal GRA vom Masterknoten eingetroffen ist, wird es gemäß Figur 8B an den anfordernden Prozessor weitergeleitet, der darauf die Auftragsinformation an alle möglichen Empfänger aussendet und auf Antwort wartet. Bei einer Anforderung von einer der Ein-/Ausgabeeinheiten IOP oder GSU und verfügbarem Schlüsselspeicher KM am eigenen Verbindungsknoten erfolgt der Informationsaustausch über den Kurzschlußweg und es ist nur die Antwort von der angeschlossenen Schlüsselspeichersteuereinheit KMU als einzige Antwort zu berücksichtigen, die unmittelbar ohne Einschaltung der Antwortüberwachungssteuerung REP-CTL für die Weiterleitung übertragen wird. Ist dagegen der Schlüsselspeicher am eigenen Knoten nicht verfügbar, dann erfolgt der Informationsaustausch über das gesonderte Verbindungsnetzwerk, wobei ebenfalls nur eine einzige Antwort über eine der Verbindungsleitungen zu erwarten ist, die von der Antwortüberwachungssteuerung REP-CTL an den anfordernden Prozessor weiterzuleiten ist. Handelt es sich dagegen um eine CPU-Anforderung, dann ist abhängig vom Befehl "READ KEY GEZIELT" entweder nur eine einzige Antwort zu erwarten oder es muß auf Antworten von allen verfügbaren Schlüsselspeichersteuereinheiten des Systems gewartet und aus allen Antworten eine gemeinsame Antwort gebildet werden. Die jeweilige Antwort wird dann an den Verarbeitungsprozessor CPU weitergeleitet. Mit Ende des jeweiligen Informationsaustausches wird in allen Fällen gemäß Figur 8B die beantwortete Anforderung zurückgesetzt und die Steuerung mit Überleitung zu Figur 8A für die Bearbeitung einer weiteren Anforderung freigegeben.

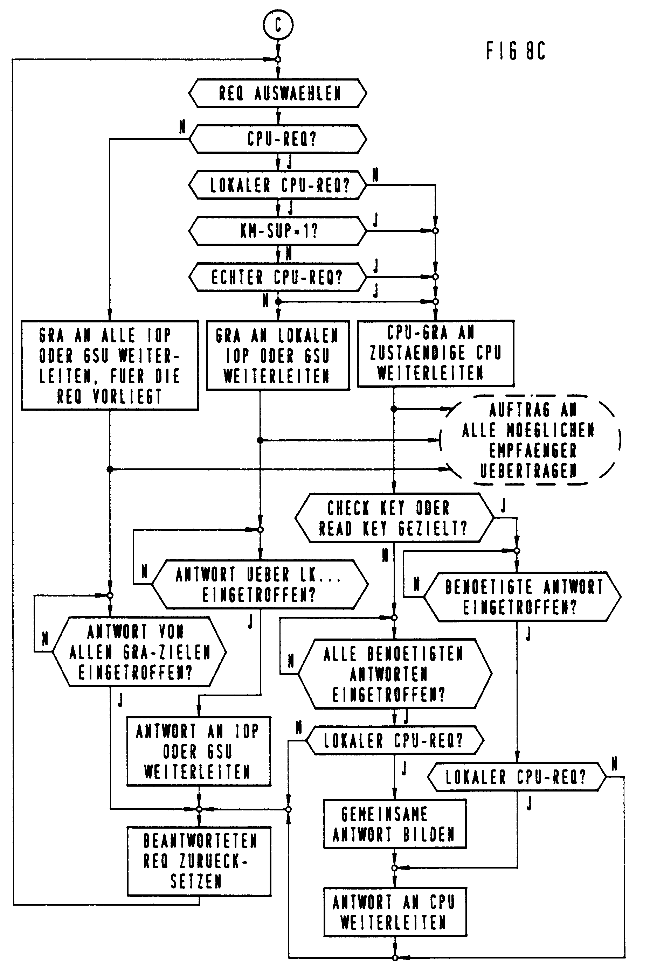

Wird bei der Prüfung auf Vorliegen einer lokalen Anforderung gemäß Figur 8A keine Anforderung ermittelt, und handelt es sich nicht um einen Masterknoten oder liegt im Falle eines Masterknotens keine weitere Anforderung vor, dann wird die Schleife im rechten oberen Teil von Figur 8A fortlaufend wirksam, bis eine Anforderung ermittelt wird, wobei im Falle eines Masterknotens alle IOP- und GSU-Anforderungen in der bereits beschriebenen Weise gebündelt werden. Danach wird die Prüfung auf Vorliegen einer Anforderung erneut begonnen und gleichzeitig in den Steuerungsablauf gemäß Figur 8C übergeleitet, der sich im Gegensatz zu dem von Figur 8B auf die Auswahlsteuerung im Masterknoten bezieht.

In der anhand von Figur 7 bereits beschriebenen Weise wird von den aus allen Verbindungsknoten vorliegenden Anforderungen eine ausgewählt und abhängig vom zugehörigen Prozessortyp ein Freigabesignal GRA entweder gemäß dem linken Flußlaufpfad an alle Ein-/Ausgabeeinheiten einer Gruppe IOP bzw. GSU, für die eine Anforderung vorliegt, oder bei einer CPU-Anforderung gemäß dem rechten Flußlaufpfad an den zuständigen Verarbeitungsprozessor CPU weitergeleitet, während im Falle einer als CPU-Anforderung zu behandelnden Anforderung einer der Ein-/Ausgabeeinheiten IOP oder GSU am eigenen Verbindungsknoten gemäß dem mittleren Flußlaufpfad das Freigabesignal nur an diese übertragen wird. Die das Freigabeisignal GRA erhaltenden Prozessoren übertragen dann die Auftragsinformation an alle möglichen Empfänger und warten auf deren Antwort.

Da die Antworten an alle Verbindungsknoten ausgesendet werden, erhält auch der Masterknoten alle Antworten, selbst wenn die Anforderung nicht von einer an ihn angeschlossenen Einheit ausgegangen ist. Der weitere Steuerungsablauf im Masterknoten ähnelt daher dem bereits anhand von Figur 8B beschriebenen Steuerungsablauf bei einer von einem fremden Verbindungsknoten ausgehenden Anforderung. Im Falle von Antworten für Ein-/Ausgabeeinheiten sind es die Antworten von allen Verbindungsknoten, die parallel für die Bearbeitung von IOP- oder GSU-Aufträgen freigegeben wurden, oder es handelt sich um nur eine einzige Antwort von einem anderen Verbindungsknoten für die lokale Ein-/Ausgabeeinheit IOP oder GSU, wenn der Schlüsselspeicher am Masterknoten nicht verfügbar ist. Im letzteren Falle ist zum Abschluß des Informationsaustausches die eingetroffene Antwort an die zuständige Einheit am Masterknoten weiterzuleiten. Beruht dagegen der Informationsaustausch gemäß dem rechten Flußlaufpfad von Figur 8C auf einem Freigabesignal für einen Verarbeitungsprozessor CPU, dann kann am Masterknoten erst anhand des in der Auftragsinformation enthaltenen Befehls CMD entschieden werden, ob das Freigabesignal auf eine echte CPU-Anforderung oder nur auf eine als solche behandelte Anforderung einer Ein-/Ausgabeeinheit zurückgeht, bei der nur eine Antwort wie bei einer Auftragsinformation mit dem Befehl READ KEY GEZIELT... zu erwarten ist. Im Masterknoten werden daher auch die Befehle der einlaufenden Auftragsinformationen überwacht und davon abhängig die Entscheidung getroffen, ob nur eine Antwort oder mehrere Antworten zu erwarten sind. Sind die benötigten Antworten eingetroffen und handelt es sich um eine lokale CPU-Anforderung, dann ist eine Antwort an den Verarbeitungsprozessor CPU am Masterknoten weiterzuleiten, die bei mehreren Antworten aus der gebildeten gemeinsamen Antwort besteht. Handelt es sich dagegen nicht um eine lokale CPU-Anforderung, dann dienen die Antworten lediglich dazu, das Ende des freigegebenen Informationsaustausches zu erkennen, damit der Masterknoten die beantwortete Anforderung zurücksetzen und eine neue auswählen kann.

Abweichend von dem anhand von Figur 8 beschriebenen Steuerungsablauf ist eine Variante auch in der Weise möglich, daß der Masterknoten an eine Gruppe von Ein-/Ausgabeeinheiten IOP und/oder GSU immer dann ein Freigabesignal $\Sigma$GRA liefert, wenn keine Anforderung vorliegt. Solange ein solches Freigabesignal wirksam ist, brauchen daher nur Anforderungen der davon nicht betroffenen Prozessoren an die Mastersteuerung weitergeleitet zu werden. Im übrigen entspricht der Steuerungsablauf dem bereits erläuterten.

**Patentansprüche**

1. Datenverarbeitungsanlage, die ausgehend von einem Monoprozessorsystem durch Vervielfachung modulartig zu einem Multiprozessorsystem mit gemeinsamem Arbeitsspeicher (MM) erweiterbar ist, wobei jedes ein Monoprozessorsystem bildende Modul aus einem Verarbeitungsprozessor (CPU), einer Speichereinheit (M...) des Arbeitsspeichers (MM), sowie einem Ein-/Ausgabeprozessor (IOP) und gegebenenfalls einem Anschluß (GSU) für einen globalen Speicher als Ein-/Ausgabeeinheiten besteht und jedes Modul einen Knoten (K...) in einem Arbeitsspeicherverbindungsnetzwerk (MCU) bildet, über das die einzelnen Prozessoren auf die einzelnen Speichereinheiten (M...) des Arbeitsspeichers (MM) zugreifen können, dessen Datenabschnitte durch Speicherschlüssel gegen unberechtigte Zugriffe geschützt sind,
**dadurch gekennzeichnet,**
daß jedem Knoten (K...) eine vom Arbeitsspeicherverbindungsnetzwerk (MCU) unabhängige individuelle Schlüsselspeichersteuereinheit (KMU) mit einem real adressierbaren Schlüsselspeicher (KM) zugeordnet ist, in den jeweils die Speicherschlüssel (ACC) aller im Arbeitsspeicher (MM) enthaltenen geschützten Datenabschnitte, z.B. Speicherseiten, unter der gleichen realen Speicheradresse (PAD) eingetragen sind, und daß alle Schlüsselspeichereinheiten (KMU) über die Knoten (K...) miteinander verbindende Übertragungskanäle ansteuerbar sind, um von jedem Knoten aus Einträge der verschiedenen Schlüsselspeicher (KM) lesen oder ändern zu können.

15

**2.** Datenverarbeitungsanlage nach Anspruch 1,
**dadurch gekennzeichnet,**
daß alle Schlüsselspeichersteuereinheiten (KMU) über ein gesondertes Verbindungsnetzwerk (KBUS) direkt miteinander verbunden sind, um von jedem Knoten aus Einträge der verschiedenen Schlüsselspeicher (KM) lesen oder ändern zu können.

**3.** Datenverarbeitungsanlage nach Anspruch 1 oder 2,
**dadurch gekennzeichnet,**
daß bei Bildung der Knoten (K...) aus zwei, jeweils ein Monoprozessorsystem bildenden Modulen jedem Verarbeitungsprozessor (CPU) eine individuelle Schlüsselspeichersteuereinheit (KMU) mit Schlüsselspeicher (KM) zugeordnet ist.

**4.** Datenverarbeitungsanlage nach Anspruch 1 oder 2,
**dadurch gekennzeichnet,**
daß bei Bildung der Knoten (K...) aus mehreren, jeweils ein Monoprozessorsystem bildenden Modulen für die Verarbeitungsprozessoren (CPU) eine gemeinsame Schlüsselspeichersteuereinheit (KMU) mit Schlüsselspeicher (KM) vorgesehen ist.

**5.** Datenverarbeitungsanlage nach einem der Ansprüche 1 bis 4,
**dadurch gekennzeichnet,**
daß die Schlüsselspeichersteuereinheit (KMU) über eine Schnittstelle (KMIA/KMIB) unmittelbar mit dem jeweiligen Verarbeitungsprozessor (CPU) oder mit der Adreßumsetzungseinheit (ACU) des Verarbeitungsprozessors und über eine weitere Schnittstelle (KB-IN/KB-OUT) mit dem gesonderten Verbindungsnetzwerk (KBUS) verbunden ist, so daß Anforderungen einerseits vom Verarbeitungsprozessor (CPU) direkt oder indirekt über die Adreßumsetzungseinheit (ACU) und andererseits vom gesonderten Verbindungsnetzwerk (KBUS) entgegengenommen werden können.

**6.** Datenverarbeitungsanlage nach Anspruch 5,
**dadurch gekennzeichnet,**
daß die Ein-/Ausgabeeinheiten (IOP, GSU) am eigenen Knoten über die Schnittstelle (KB-IN/KB-OUT) für das gesonderte Verbindungsnetzwerk (KBUS) an die der Schlüsselspeichersteuereinheit (KMU) anschließbar sind.

**7.** Datenverarbeitungsanlage nach Anspruch 6,
**dadurch gekennzeichnet,**
daß zwischen den Schnittstellen (KB-...) zum Anschluß der Ein-/Ausgabeeinheiten (IOP, GSU) und der Schnittstelle (KB-...) zwischen der Schlüsselspeichersteuereinheit (KMU) und dem gesonderten Verbindungsnetzwerk (KBUS) am eigenen Knoten ein Kurzschlußweg parallel zum Anschluß an das gesonderte Verbindungsnetzwerk (KBUS) vorgesehen ist, und daß der Kurzschlußweg jeweils wirksam geschaltet wird, wenn die Schlüsselspeichersteuereinheit (KMU) am Knoten verfügbar ist.

**8.** Datenverarbeitungsanlage nach einem der Ansprüche 1 bis 7,
**dadurch gekennzeichnet,**
daß im Rahmen von Zugriffen zum Arbeitsspeicher (MM) nur die den Schlüsseleinträgen (KEY) des den Speicherschlüssel (ACC) liefernden Schlüsselspeichers (KM) zugeordneten Steuerbits (R/C) geändert werden, während bei der Belegung eines geschützten Datenabschnitts im Arbeitsspeicher (MM) mit neuen Daten die durch gesonderte Befehle eines steuernden Verarbeitungsprozessors (CPU) abgefragten Steuerbits (R, C) aller Schlüsselspeicher (KM) berücksichtigt werden.

**9.** Datenverarbeitungsanlage nach Anspruch 7,
**dadurch gekennzeichnet,**
daß die Steuerbits (R, C) der einander entsprechenden Schlüsseleinträge (KEY) in den einzelnen Schlüsselspeichern (KM) und aller Schlüsseleinträge nacheinander in periodisch wiederkehrenden Zeitabständen von einem vorgegebenen Verarbeitungsprozessor (CPU) aus abgefragt werden, um Informationen als Entscheidungsbasis für den Ersetzungsalgorithmus des Arbeitsspeichers (MM) zu gewinnen, wobei das einen Lesezugriff anzeigende Steuerbit (R) jeweils zurückgesetzt wird.

**10.** Datenverarbeitungsanlage nach einem der Ansprüche 1 bis 9,
**dadurch gekennzeichnet,**
- daß das die einzelnen Schlüsselspeichersteuereinheiten (KMU) verbindende gesonderte Verbindungsnetzwerk (KBUS) aus einem jeder Schlüsselspeichersteuereinheit (KMU) zugeordneten Verbindungsknoten besteht, an den außer der Schlüsselspeichersteuereinheit (KMU) mit den zugehörigen Verarbeitungsprozessoren (CPU) auch die zugeordneten Ein-/Ausgabeeinheiten (IOP, GSU) angeschlossen sind,
- daß jeder Verbindungsknoten über eine bidirektionale Verbindungsleitung (LK...) mit jedem anderen Verbindungsknoten verbunden ist,
- daß ein frei wählbarer Verbindungsknoten jeweils als Masterknoten den Informationsaustausch zwischen den an das Verbindungsnetzwerk (KBUS) angeschlossenen Einheiten (KMU/CPU, IOP, GSU) steuert,
- daß von den Einheiten an einem der Verbindungsknoten ausgehende Anforderungen (REQ) zum Informationsaustausch jeweils an alle anderen Verbindungsknoten weitergeleitet werden, wenn der eigene Verbindungsknoten nicht der Masterknoten ist,
- daß der Masterknoten das Vorliegen von Anforderungen (REQ) fortlaufend überprüft, jeweils eine davon auswählt, und dem zugehörigen Verbindungsknoten die Berechtigung (GRA) zur Aussendung seiner Auftragsinformation an alle Verbindungsknoten erteilt,
- daß nach Bearbeitung der Auftragsinformation von der Schlüsselspeichersteuereinheit (KMU) in den jeweils zuständigen Verbindungsknoten alle diese Verbindungsknoten eine Antwortinformation an alle angeschlossenen Verbindungsknoten senden, so daß sowohl der berechtigte Verbindungsknoten als auch der Masterknoten die Antwortinformation erhält, woraufhin der Masterknoten eine weitere vorliegende Anforderung auswählt.

**11.** Datenverarbeitungsanlage nach Anspruch 10,
**dadurch gekennzeichnet,**
daß bei mehreren gleichzeitig vorliegenden Anforderungen (REQ) der Einheiten (CPU, IOP, GSU) an einem Verbindungsknoten nur die jeweils bevorrechtigte Anforderung wirksam und an den Masterknoten weitergeleitet wird, wenn die Anforderung von einem anderen Verbindungsknoten als dem Masterknoten stammt.

**12.** Datenverarbeitungsanlage nach Anspruch 11,
**dadurch gekennzeichnet,**
daß bei von einem Verarbeitungsprozessor (CPU) ausgehenden Anforderungen (REQ), die eine Bearbeitung der Auftragsinformation von allen Schlüsselspeichersteuereinheiten (KMU) zur Folge haben, die Auftragsinformation zunächst an die Schnittstelle (KB-OUT) zum gesonderten Verbindungsnetzwerk (KBUS) weitergeleitet wird, bevor sie parallel zur Aussendung über das gesonderte Verbindungsnetzwerk (KBUS) der Schlüsselspeichersteuereinheit (KMU) am anfordernden Verbindungsknoten zur Bearbeitung übergeben wird, und daß die zugehörige Antwort ebenfalls erst an das gesonderte Verbindungsnetz (KBUS) weitergeleitet wird.

**13.** Datenverarbeitungsanlage nach einem der Ansprüche 10 bis 12,
**dadurch gekennzeichnet,**
daß im jeweils anfordernden Verbindungsknoten alle von den für die Bearbeitung der jeweiligen Auftragsinformation zuständigen Schlüsselspeichersteuereinheiten (KMU) eintreffenden Antworten überwacht werden und bei mehreren Antworten jeweils nach Vorliegen aller benötigten Antworten eine gemeinsame Antwort für die zuständige anfordernde Einheit (CPU) am Verbindungsknoten durch Oderung der in den einzelnen Antworten enthaltenen Steuerbits (C, R) gebildet und an die Einheit übergeben wird.

**14.** Datenverarbeitungsanlage nach einem der Ansprüche 10 bis 13 in Verbindung mit Anspruch 7,
**dadurch gekennzeichnet,**
daß bei von den Ein-/Ausgabeeinheiten (IOP, GSU) an einem Verbindungsknoten ausgehenden Anforderungen (REQ) auf Überprüfung der Zugriffsberechtigung zum Arbeitsspeicher (MM) bei Vorhandensein der zuständigen Schlüsselspeichersteuereinheit (KMU) am eigenen Verbindungsknoten die Auftragsinformation und die zugehörige Antwortinformation nach Freigabe durch den Masterknoten über den Kurzschlußweg am Verbindungsnetzwerk (KBUS) vorbei mit der Schlüsselspeichersteuereinheit (KMU) ausgetauscht werden, wobei die Antwortinformation auch an den Masterknoten weitergeleitet wird, während bei nicht verfügbarer Schlüsselspeichersteuereinheit (KMU) die Auftragsinformation über das Verbindungsnetzwerk (KBUS) ausgesendet wird und von einer vorgegebenen Schlüsselspeichersteuereinheit (KMU) an einem anderen Verbindungsknoten beantwortet wird.

**15.** Datenverarbeitungsanlage nach einem der Ansprüche 10 bis 14,
**dadurch gekennzeichnet,**
- daß in jedem Verbindungsknoten an der Schnittstelle (KB-IN/KB-OUT) für die Schlüsselspeichersteuereinheiten (KMU) sowohl ankommend als auch abgehend Pufferspeicher für die Auftragsinformationen und die Antwortinformationen und an den Schnittstellen (KB-...) für die sonstigen Ein-/Ausgabeeinheiten (IOP, GSU) abgehend nur Pufferspeicher für die Auftragsinformationen und ankommend nur Pufferspeicher für die Antwortinformationen vorgesehen sind, während lediglich die ankommenden Verbindungsleitungen (LK...-IN) mit Pufferspeichern (BUF) für die Antwortinformationen versehen sind, so daß Auftragsinformationen ohne weitere Zwischenspeicherung vom Pufferspeicher an einer der Schnittstellen (KB-...) direkt oder über die Verbindungsleitungen (LK...) des Verbindungsnetzwerkes (KBUS) zum bzw. den Pufferspeichern an anderen Schnittstellen (KB...) übertragen werden können, während über die Verbindungsleitungen (LK...) weitergeleitete Antwortinformationen am anderen Ende der Verbindungsleitungen (LK...) im dortigen Pufferspeicher (BUF) zunächst zwischengespeichert werden,
- daß allen abgehend betriebenen Pufferspeichern an den Schnittstellen (KB-...) eines Verbindungsknotens jeweils eine Steuerschaltung (TRA-CTL) zugeordnet ist, die das Bereitstellen von Informationen durch die angeschlossenen Einheiten (CPU, IOP, GSU) überwachen, bei Vorliegen einer Auftragsinformation ein Anforderungssignal (REQ) erzeugen und nach Eintreffen des Freigabesignals (GRA) die Auftragsinformation weiterleiten, dagegen bei Vorliegen einer Antwortinformation diese unmittelbar weiterleiten, und
- daß allen in einem Verbindungsknoten ankommenden Verbindungsleitungen (LK...) ebenfalls eine Steuerschaltung (LK-CTL) zugeordnet ist, die im Falle des Masterknotens das Eintreffen von Anforderungssignalen (REQ) und im anderen Falle das Eintreffen von Freigabesignalen (GRA) sowie das Eintreffen von Auftrags- oder Antwortinformationen überwacht, wobei Auftragsinformationen unmittelbar an den ankommend betriebenen Pufferspeicher an der Schnittstelle (KB-IN) für die Schlüsselspeichersteuereinheit (KMU) weitergeleitet werden, während Antwortinformationen im vorgesehenen Pufferspeicher (BUF) zwischengespeichert werden.

**16.** Datenverarbeitungsanlage nach Anspruch 15,
**dadurch gekennzeichnet,**
- daß in jedem Verbindungsknoten eine erste Prioritätssteuerschaltung (PRIO1/COD) vorgesehen ist, die die von den Einheiten am Verbindungsknoten ausgehenden Anforderungssignale (REQ) speichert und die jeweils bevorrechtigte Anforderung ermittelt,
- daß die ermittelte Anforderung, wenn der Verbindungsknoten nicht der Masterknoten ist, über alle abgehenden Verbindungsleitungen (LK...) weitergeleitet wird, und
- daß ein daraufhin über eine der Verbindungsleitungen ankommendes Freigabesignal (GRA) abhängig von der vorher ausgewählten Anforderung unmittelbar an die Schnittstelle (KB-OUT) der zuständigen Einheit (z.B. KMU/CPU) weitergeleitet wird,
- daß in jedem Verbindungsknoten eine zweite Prioritätssteuerschaltung (PRIO2/COD) vorgesehen ist, die im Falle, daß der Verbindungsknoten ein Masterknoten (MK = I) ist, wirksamgeschaltet wird und der sowohl die von der ersten Prioritätssteuerschaltung (PRIO1/COD) ausgewählte Anforderung als auch die über die Verbindungsleitungen (LK...) eintreffenden Anforderungssignale (REQ) zur Abspeicherung und zur Ermittlung einer bevorrechtigten Anforderung zugeführt werden, und
- daß ein der ermittelten Anforderung entsprechendes Freigabesignal (GRA) erzeugt und an die anfordernde Schnittstelle (KB-OUT) am Verbindungsknoten oder über die entsprechende Verbindungsleitung (LK...) weitergeleitet wird.

**17.** Datenverarbeitungsanlage nach Anspruch 16,
**dadurch gekennzeichnet,**
daß für die Verbindungsleitungen (LK...) in ankommender und abgehender Richtung neben den Datenleitungen jeweils nur eine Signalleitung zur Übertragung des Anforderungssignales (REQ) bzw. des Freigabesignales (GRA) vorgesehen ist und
daß für die Unterscheidung der anfordernden Einheiten (KMU/CPU, IOP, GSU) am Masterknoten die über die Verbindungsleitungen (LK...) weitergeleiteten Anforderungssignale (REQ) entsprechend unterschiedlich gestaltet sind.

18. Datenverarbeitungsanlage nach Anspruch 16 oder 17,
**dadurch gekennzeichnet,**
daß alle am Masterknoten eintreffenden Anforderungen von Ein-/Ausgabeeinheiten (IOP bzw. GSU) jeweils gruppenweise gebündelt und der zweiten Prioritätssteuerschaltung (PRIO2/DEC) als jeweils eine Anforderung zugeführt werden und daß bei Ermittlung einer der gebündelten Anforderungen als bevorrechtigt ein Freigabesignal (GRA) parallel an alle Einheiten dieser Gruppe weitergeleitet wird, für die eine Anforderung vorliegt, so daß alle freigegebenen Einheiten an den verschiedenen Verbindungsknoten den Informationsaustausch mit der zuständigen Schlüsselspeicher steuereinheit (KMU) gleichzeitig ausführen können.

19. Datenverarbeitungsanlage nach einem der Ansprüche 16 bis 18,
**dadurch gekennzeichnet,**
daß eine Anforderung (REQ) von einer der Ein-/Ausgabeeinheiten (IOP bzw. GSU) im Falle, daß die eigentlich zuständige Schlüsselspeichersteuereinheit (KMU) am eigenen Verbindungsknoten nicht verfügbar ist, wie eine Anforderung eines Verarbeitungsprozessors (CPU) behandelt wird, und
daß ein daraufhin wirksam werdendes Freigabesignal (GRA) am Ort des anfordernden Verbindungsknotens abhängig von der Auswahlstellung der ersten Prioritätssteuerschaltung (PRIO1/COD) in ein Freigabesignal für die betroffene Ein-/Ausgabeeinheit (IOP bzw. GSU) umgewandelt wird.

20. Datenverarbeitungsanlage nach einem der Ansprüche 16 bis 19,
**dadurch gekennzeichnet,**
daß die zweite Prioritätssteuerschaltung (PRIO2/COD) im Masterknoten jeweils dann, wenn keine zu bearbeitende Anforderung (REQ) vorliegt, an alle Ein-/Ausgabeeinheiten einer Gruppe (z.B. IOP) ein Freigabesignal (GRA) schickt, demzufolge Anforderungen dieser Einheiten im jeweiligen Verbindungsknoten durch die dortige erste Prioritätssteuerschaltung (PRIO1/COD) zwar gespeichert, aber nicht an den Masterknoten weitergeleitet und die zugehörigen Auftragsinformationen bei verfügbarem Schlüsselspeicher über den Kurzschlußweg unmittelbar an die Schlüsselspeichersteuereinheit (KMU) weitergeleitet werden, während die Anforderungen (REQ) der übrigen Einheiten (z.B. CPU, GSU) zum Masterknoten weitergeleitet werden.

21. Datenverarbeitungsanlage nach einem der Ansprüche 10 bis 20,
**dadurch gekennzeichnet,**
- daß in jedem Verbindungsknoten eine Antwortüberwachungssteuerung (REP-CTL) vorgesehen ist, die mit den Pufferspeichern (BUF) für die Antwortinformationen aller ankommenden Verbindungsleitungen (LK...) und der Schnittstelle (KB-OUT) für die Schlüsselspeichersteuereinheit (KMU) gekoppelt ist, die im Falle eines Masterknotens (MK=I) alle vom Verbindungsknoten ausgehenden und über die Verbindungsleitungen (LK...) eintreffenden Auftragsinformationen und im anderen Falle nur die vom eigenen Knoten ausgehenden Auftragsinformationen überwacht und abhängig von der Art des jeweiligen Auftrages (CMD) und der jeweiligen Systemkonfiguration (CONF) die Quellen der zu erwartenden Antworten ermittelt,
- daß nach Vorliegen der Antworten von allen ermittelten Quellen die einzige oder eine aus allen Antworten gebildete gemeinsame Antwort an die Schnittstellen für die Einheiten am eigenen Verbindungsknoten gesendet und in der ersten Prioritätssteuerschaltung (PRIO1/COD) die Speicherung der beantworteten Anforderung und damit die Sperre für die Auswahl einer weiteren Anforderung wieder aufgehoben wird und
- daß im Masterknoten die Speicherung der beantworteten Anforderung und die Sperre für die zweite Prioritätssteuerschaltung (PRIO2/COD) ebenfalls wieder aufgehoben wird.

FIG 1

FIG 2

EP 0 600 113 A1

FIG 3

FIG 4

FIG 5A

```
  ( SET R/C )              ( READ KEY, SET R )          ( READ KEY, SET R/C )
       │                          │                             │
       ▼                          ▼                             ▼
┌──────────────┐          ┌──────────────────┐        ┌────────────────────┐
│  LESEN KM    │          │  LESEN KM UND    │        │  LESEN KM UND KIAT │
│   MIT PAD    │          │  KIAT MIT PAD    │        │      MIT PAD       │
└──────────────┘          └──────────────────┘        └────────────────────┘
       │                          │                             │
       ▼                          ▼                             ▼
┌──────────────────┐      ┌─────────────────────┐    ┌──────────────────────┐
│ WERT FUER R UND C│      │  WERT FUER R UND    │    │  WERT FUER R, C UND  │
│ AUF "1" STELLEN  │      │ KIAT AUF "1" STELLEN│    │  KIAT AUF "1" STELLEN│
└──────────────────┘      └─────────────────────┘    └──────────────────────┘
       │                          │                             │
       ▼                          ▼                             ▼
┌──────────────────┐      ┌─────────────────────┐
│  NEUE WERTE IN   │      │  NEUE WERTE IN KM   │
│  KM SCHREIBEN    │      │  UND KIAT SCHREIBEN │
└──────────────────┘      └─────────────────────┘
       │                          │
       │                          ▼
       │                  ┌─────────────────────┐
       │                  │   KEY AUS KM-R      │
       │                  │  AN TLB MIT KMR1    │
       │                  └─────────────────────┘
       │                          │
       └────────────────────────►─┘
                                  ▼
                              ( ENDE )
```

CHECK KEY-L → LESEN KM MIT PAD → KM:KEY=IOP:KEY? — J → WERT FUER R AUF "1" STELLEN → NEUEN WERT IN KM SCHREIBEN

CHECK KEY-S → LESEN KM MIT PAD → KM:KEY=IOP:KEY? — J → WERT FUER R UND C AUF "1" STELLEN → NEUE WERTE IN KM SCHREIBEN

KM:KEY=IOP:KEY? — N

RRBE → LESEN KM MIT PAD → WERT FUER R AUF "0" STELLEN → NEUEN WERT IN KM SCHREIBEN

ISKE → LESEN KM MIT PAD → KEY AUS KEY-B IN KM SCHREIBEN

SSKE → LESEN KM MIT PAD → KIAT=1? — N → KEY AUS KEY-B IN KM SCHREIBEN

KIAT=1? — J → PAD AUS PAD-B NACH PAD-BUF UEBERNEHMEN → WERT FUER KIAT AUF "0" STELLEN → NEUEN WERT IN KIAT UND KEY AUS KEY-B IN KM SCHREIBEN → ANTWORT BILDEN UND AN KB-OUT UEBERGEBEN → INTERRUPT VERANLASSEN

ANTWORT BILDEN UND AN KB-OUT UEBERGEBEN → ENDE

FIG 5B

FIG 6

FIG 7

KB-CTL

FIG 8A

```
                    ( START )
                        │
         ┌──────────────┤
         │              ▼
         │   ┌──────────────────────┐
         │   │  EINTREFFENDE REQ     │
         │   │  SPEICHERN            │
         │   └──────────────────────┘
         │              │
         └──────────────┤
                        │
    (B)─────────────────┤──────────────────────────────────────┐
                        ▼                                       │
              ╱─────────────────╲        N                      │
             ╱  LOKALER REQ       ╲──────────────┐              │
             ╲  VORHANDEN?        ╱              │              │
              ╲─────────────────╱                │              │
                        │ J                       ▼              │
                        ▼                ╱─────────────────╲  N  │
             ┌──────────────────┐       ╱  MASTERKNOTEN?    ╲────┤
             │  LOKALEN REQ      │      ╲                   ╱    │
             │  AUSWAEHLEN       │       ╲─────────────────╱     │
             └──────────────────┘                │ J            │
                        │                         ▼             │
          J   ╱─────────────────╲       ╱─────────────────╲  N  │
         ┌────╱  CPU-REQ?         ╲     ╱  SONSTIGER REQ?   ╲────┤
         │    ╲─────────────────╱      ╲                   ╱     │
         │              │ N             ╲─────────────────╱      │
         │   J ╱─────────────────╲              │ J             │
         ├────╱  KM-SUP=1?         ╲            │               │
         │    ╲─────────────────╱               │               │
         │              │ N                     │               │
         │   ┌──────────────────┐               │               │
         │   │  REQ ALS CPU-REQ  │              │               │
         │   │  BEHANDELN        │              │               │
         │   └──────────────────┘              │               │
         │              │                       │               │
         └──────────────┤                       │               │
                        ▼                        │               │
       N   ╱─────────────────╲    J              │               │
     ┌─────╱  MASTERKNOTEN?    ╲─────────────────┤               │
     │     ╲─────────────────╱                   │               │
     │                                           │               │
     ▼                                           ▼               │
┌──────────────────────┐        ┌──────────────────────┐         │
│ AUSGEWAEHLTEN LOKALEN │        │ ALLE IOP- UND GSU-    │         │
│ REQ UEBER ALLE LK...  │        │ REQ ZU EINEM REQ FUER │         │
│ WEITERLEITEN          │        │ DIE AUSWAHL BUENDELN  │─────────┘
└──────────────────────┘        └──────────────────────┘
     │                                    │
     ▼                                    ▼
    (A)                                  (C)
```

FIG 8B

A

GRA EINGETROFFEN?  N

J

GRA:CPU?  N   J

GRA AN IOP ODER
GSU WEITERLEITEN

GRA AN CPU
WEITERLEITEN

AUFTRAG AN ALLE
MOEGLICHEN EMP-
FAENGER UEBERTRAGEN

KM-SUP=1?  N

J

READY KEY GEZIEHLT?  J

N

ANTWORT UEBER LK...
EINGETROFFEN?  N

J

BENOETIGTE ANTWORT
EINGETROFFEN?  N

J

ANTWORT VON KMU
EINGETROFFEN?  N

J

ALLE BENOETIGTEN
ANTWORTEN
EINGETROFFEN?  N

J

GEMEINSAME
ANTWORT BILDEN

ANTWORT AN IOP ODER
GSU WEITERLEITEN

ANTWORT AN CPU
WEITERLEITEN

BEANTWORTETEN REQ
ZURUECKSETZEN

B

FIG 8C

```
                    ( C )

              ┌──────────────────┐
              │  REQ AUSWAEHLEN  │
              └──────────────────┘
         N         │
    ◄──────┬───────┤
           │   ┌──────────────────┐
           │   │    CPU-REQ?      │
           │   └──────────────────┘
           │        │ J
           │   ┌──────────────────┐    N
           │   │ LOKALER CPU-REQ? │──────────┐
           │   └──────────────────┘          │
           │        │ J                       │
           │   ┌──────────────────┐  J        │
           │   │    KM-SUP=1?     │───────────┤
           │   └──────────────────┘          │
           │        │ N                       │
           │   ┌──────────────────┐  J        │
           │   │ ECHTER CPU-REQ?  │───────────┤
           │   └──────────────────┘  J        │
           │        │ N                       │
  ┌──────────────┐ ┌──────────────┐ ┌─────────────────┐
  │ GRA AN ALLE  │ │ GRA AN       │ │ CPU-GRA AN      │
  │ IOP ODER GSU │ │ LOKALEN      │ │ ZUSTAENDIGE CPU │
  │ WEITER-      │ │ IOP ODER GSU │ │ WEITERLEITEN    │
  │ LEITEN, FUER │ │ WEITERLEITEN │ └─────────────────┘
  │ DIE REQ      │ └──────────────┘
  │ VORLIEGT     │
  └──────────────┘
```

AUFTRAG AN ALLE MOEGLICHEN EMPFAENGER UEBERTRAGEN

```
              ┌──────────────────┐   J
              │ CHECK KEY ODER   │──────────┐
              │ READ KEY GEZIELT?│          │
              └──────────────────┘          │
                   │ N                       │
     ┌──────────────────┐              ┌──────────────────┐
  N  │ ANTWORT UEBER LK │           N  │ BENOETIGTE       │
 ◄───│ ... EINGETROFFEN?│          ◄───│ ANTWORT          │
     └──────────────────┘              │ EINGETROFFEN?    │
           │ J                         └──────────────────┘
     ┌──────────────────┐                    │ J
  N  │ ANTWORT VON      │           ┌──────────────────┐
 ◄───│ ALLEN GRA-ZIELEN │        N  │ ALLE BENOETIGTEN │
     │ EINGETROFFEN?    │       ◄───│ ANTWORTEN        │
     └──────────────────┘           │ EINGETROFFEN?    │
           │ J                      └──────────────────┘
     ┌──────────────────┐                 │
     │ ANTWORT AN IOP   │    N  ┌──────────────────┐
     │ ODER GSU         │   ◄───│ LOKALER CPU-REQ? │
     │ WEITERLEITEN     │       └──────────────────┘
     └──────────────────┘             │ J    ┌──────────────────┐  N
                                       │   ◄──│ LOKALER CPU-REQ? │──┐
                                       │      └──────────────────┘  │
     ┌──────────────────┐       ┌──────────────┐        │ J         │
     │ BEANTWORTETEN    │       │ GEMEINSAME   │◄───────┘           │
     │ REQ ZURUECK-     │       │ ANTWORT      │                    │
     │ SETZEN           │       │ BILDEN       │                    │
     └──────────────────┘       └──────────────┘                    │
                                       │                            │
                                ┌──────────────┐                    │
                                │ ANTWORT AN   │                    │
                                │ CPU          │                    │
                                │ WEITERLEITEN │                    │
                                └──────────────┘                    │
                                       │◄───────────────────────────┘
```

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 441 152 (MATSUURA ET AL) | 1,3,8, 10,11 | G06F15/16 G06F12/14 |
| | * Zusammenfassung; Abbildungen 1-3 * | | |
| Y | | 2,4-6 | |
| | * Spalte 2, Zeile 48 - Spalte 4, Zeile 62 * | | |
| | * Ansprüche 1-3,5,6,10-13 * | | |
| A | | 16-21 | |
| | --- | | |
| Y | EP-A-0 288 636 (NETWORK SYSTEMS CORP.) <br> * Zusammenfassung; Abbildungen 1,3,5,7,9,13 * <br> * Seite 2, Zeile 37 - Seite 5, Zeile 7 * <br> * Seite 19, Zeile 1 - Seite 20, Zeile 57 * <br> * Seite 26, Zeile 41 - Seite 27, Zeile 18 * <br> * Seite 29, Zeile 35 - Zeile 56 * | 2,4-6 | |
| A | | 10,11, 14-21 | |
| | --- | | |
| A | EP-A-0 429 733 (TEXAS) | 1,5,7, 10-12, 14,16-21 | **RECHERCHIERTE SACHGEBIETE (Int. Cl.5 )** <br><br> G06F |
| | * Zusammenfassung; Abbildungen 1,10,16,19,28 * <br> * Seite 3, Zeile 10 - Zeile 34 * <br> * Seite 12, Zeile 1 - Zeile 35 * <br> * Seite 18, Zeile 23 - Zeile 51 * <br> * Seite 33, Zeile 20 - Seite 34, Zeile 39 * <br> * Seite 42, Zeile 45 - Seite 43, Zeile 32 * | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 02 JULI 1993 | POWELL D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)